# EUROPEAN PATENT APPLICATION

(11) **EP 4 253 905 A1**
(43) Date of publication of application: **04.10.2023**
(21) Application number: 21897927.6
(22) Date of filing: 22.11.2021
(51) Int. Cl.: G01B 21/20, G06T 7/00

(54) **INFORMATION PROCESSING DEVICE, INFORMATION PROCESSING METHOD, AND PROGRAM**

(30) Priority: 24.11.2020 JP 2020194575
(71) Applicant: Sumitomo Heavy Industries, Ltd., Tokyo 141-6025 (JP)
(72) Inventor: KIYOTA, Yoshihisa, Yokosuka-shi, Kanagawa 237-8555 (JP); XU, Fang, Yokosuka-shi, Kanagawa 237-8555 (JP)
(74) Representative: Louis Pöhlau Lohrentz
(86) International application number: PCT/JP2021/042847
(87) International publication number: WO 2022/113954

(57) **Abstract**

Provided is a technique that is capable of inspecting a difference between to-be-compared large-sized structures. An inspection assist device 100 according to one embodiment of the present disclosure includes a link process part 1104, 1104A, or 1104B that manages, based on a sensing data group regarding a shape of one to-be-compared large-sized structure and three-dimensional shape data of one to-be-compared large-sized structure, a relation between the sensing data group regarding the shape of one to-be-compared large-sized structure or the three-dimensional shape data of one to-be-compared large-sized structure, and sensing data regarding a shape of the other to-be-compared large-sized structure so that common sites of one and the other of the large-sized structures can be compared with each other.

## Description

### [Technical Field]

The present disclosure relates to, for example, an information processing device.

### [Background Art]

In a disclosed technique, by, for example, capturing to-be-compared apparatuses with a camera and comparing the captured images with each other, differences between the to-be-compared objects are inspected (e.g., change in the same device at different points in time, and differences between different devices of the same design) (see PTL 1).

### [Citation List]

### [Patent Literature]

[PTL 1] Japanese Unexamined Patent Publication No. 2016-99633

### [Summary of Invention]

### [Technical Problem]

However, for example, when an inspection object is a large-sized structure including a large-sized machine such as a shovel and a plant such as a steel plant, there arises a need to obtain many captured images that focus on sites of the inspection object. Also, it is substantially impossible to obtain uniform images captured at the same distance and at the same angle every time. Therefore, for example, when change is inspected over time, even if captured image groups obtained at a previous time and a current time are provided, it is difficult to extract a combination of images corresponding to the sites to be inspected. As a result, inspection efficiency may decrease and inspection itself may be impossible to do.

In view of the above, it is an object to provide a technique that is capable of inspecting any differences between to-be-compared large-sized structures.

### [Solution to Problem]

In order to achieve the above object, one embodiment of the present disclosure provides an information processing device including a managing part that manages, based on a first sensing data group regarding a shape of a first structure and data of a three-dimensional shape of the first structure, a relation between the first sensing data group or the data of the three-dimensional shape of the first structure, and second sensing data regarding a shape of a second structure so that common sites of the first structure and the second structure can be compared with each other.

Also, another embodiment of the present disclosure provides an information processing method including a managing step in which an information processing device manages, based on a first sensing data group regarding a shape of a first structure and data of a three-dimensional shape of the first structure, a relation between the first sensing data group or the data of the three-dimensional shape of the first structure, and second sensing data regarding a shape of a second structure so that common sites of the first structure and the second structure can be compared with each other.

Also, still another embodiment of the present disclosure provides a program that causes an information processing device to execute a managing step of managing, based on a first sensing data group regarding a shape of a first structure and data of a three-dimensional shape of the first structure, a relation between the first sensing data group or the data of the three-dimensional shape of the first structure, and second sensing data regarding a shape of a second structure so that common sites of the first structure and the second structure can be compared with each other.

### [Advantageous Effects of Invention]

According to the above embodiments, it is possible to inspect any differences between to-be-compared large-sized structures.

### [Brief Description of Drawings]

[FIG. 1] FIG. 1 is a diagram schematically illustrating one example of an inspection assist system.
[FIG. 2] FIG. 2 is a view of a specific example of a large-sized structure to be inspected by an inspection assist system.
[FIG. 3] FIG. 3 is a view of a specific example of a large-sized structure to be inspected by an inspection assist system.
[FIG. 4] FIG. 4 is a view of a specific example of a large-sized structure to be inspected by an inspection assist system.
[FIG. 5] FIG. 5 is a functional block diagram of a first example of a configuration of an inspection assist device.
[FIG. 6] FIG. 6 is a flowchart that schematically illustrates one example of a pre-process regarding assist of comparative inspection by a control device.
[FIG. 7] FIG. 7 is a schematic explanatory view of contents of a pre-process regarding assist of inspection by a control device.
[FIG. 8] FIG. 8 is a schematic explanatory view of contents of a pre-process regarding assist of inspection by a control device.
[FIG. 9] FIG. 9 is a flowchart that schematically illustrates one example of a main process regarding assist of comparative inspection by a control device.
[FIG. 10] FIG. 10 is a view of one example of a combination of image data of common sites of to-be-compared large-sized structures, the image data being extracted from an image data group.
[FIG. 11] FIG. 11 is a view of one example of a combination of image data of common sites of to-be-compared large-sized structures, the image data being displayed on a display device.
[FIG. 12] FIG. 12 is a functional block diagram of a second example of a configuration of an inspection assist device.
[FIG. 13] FIG. 13 is a flowchart that schematically illustrates another example of a main process regarding assist of comparative inspection by a control device.
[FIG. 14] FIG. 14 is a functional block diagram of a third example of a configuration of an inspection assist device.
[FIG. 15] FIG. 15 is a flowchart that schematically illustrates another example of a pre-process regarding assist of comparative inspection by a control device.
[FIG. 16] FIG. 16 is a functional block diagram of a fourth example of a configuration of an inspection assist device.
[FIG. 17] FIG. 17 is a schematic explanatory view of contents of a pre-process regarding assist of comparative inspection by a control device.
[FIG. 18] FIG. 18 is a functional block diagram of a fifth example of a configuration of an inspection assist device.
[FIG. 19] FIG. 19 is a flowchart that schematically illustrates still another example of a pre-process regarding assist of comparative inspection by a control device.
[FIG. 20] FIG. 20 is a schematic explanatory view of contents of a pre-process regarding assist of comparative inspection by a control device.
[FIG. 21] FIG. 21 is a schematic explanatory view of contents of a pre-process regarding assist of comparative inspection by a control device.
[FIG. 22] FIG. 22 is a flowchart that schematically illustrates still another example of a main process regarding assist of comparative inspection by a control device.
[FIG. 23] FIG. 23 is a schematic view of another example of an inspection assist system.

### [Description of Embodiments]

Hereinafter, referring to the drawings, embodiments will be described.

### [One example of inspection assist system]

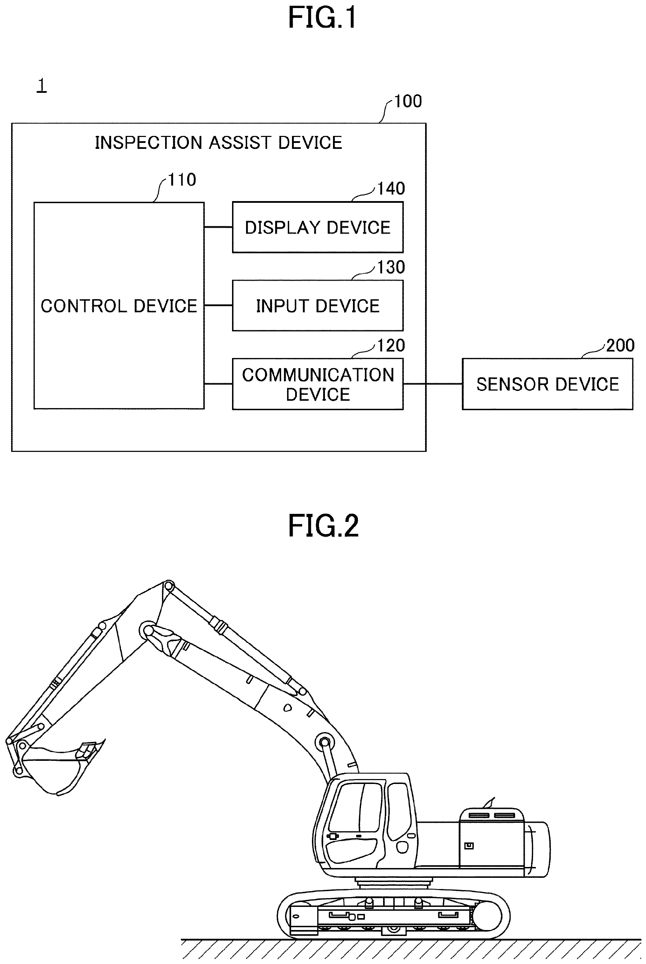

First, referring to FIG. 1 to FIG. 4, one example of an inspection assist system 1 according to the present embodiment will be described.

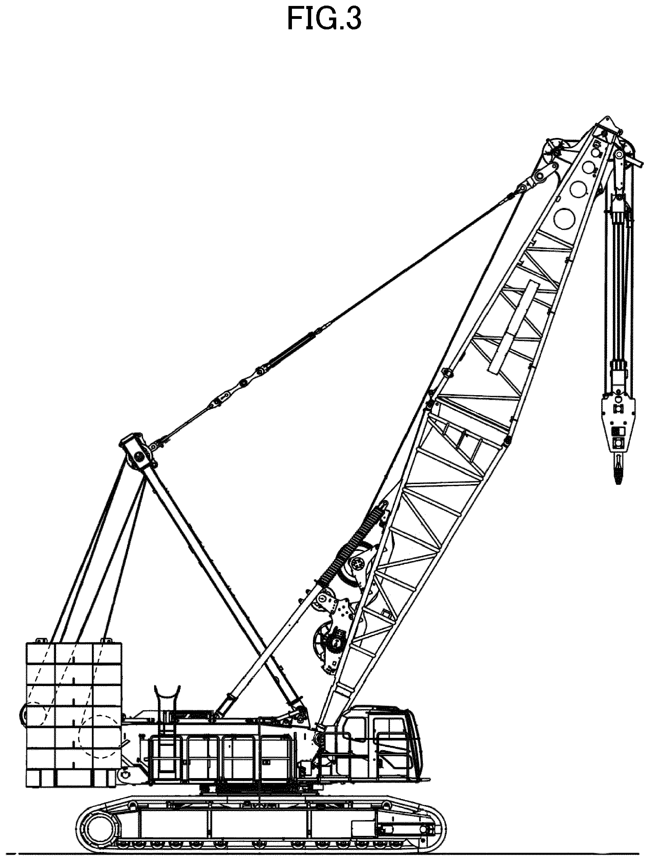

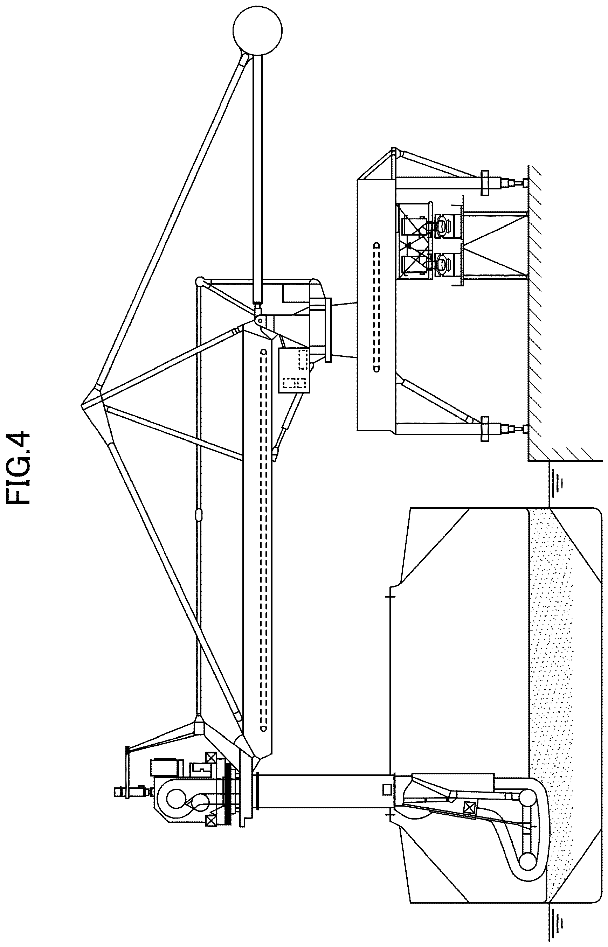

FIG. 1 is a diagram schematically illustrating one example of the inspection assist system 1 according to the present embodiment. FIG. 2 to FIG. 4 are views of specific examples of the large-sized structure to be inspected by the inspection assist system 1. Specifically, FIG. 2 is a side view of a shovel as one example of the large-sized structure to be inspected by the inspection assist system 1. FIG. 3 is a side view of a mobile crane (crawler crane) as another example of the large-sized structure to be inspected by the inspection assist system 1. FIG. 4 is a side view of a continuous unloader as still another example of the large-sized structure to be inspected by the inspection assist system 1.

The inspection assist system 1 assists inspection by a user of any differences between to-be-compared large-sized structures (hereinafter this inspection will be referred to as "comparative inspection" for the sake of convenience).

Examples of the large-sized structure include large-sized machines. Examples of the large-sized machines include work machines such as shovels, mobile cranes (crawler cranes), and continuous unloaders, as illustrated in FIG. 2 to FIG. 4. Also, examples of the large-sized structure include large-sized plants (buildings of factories and facilities of factories). Examples of the large-sized plants include buildings and facilities of power plants and buildings and facilities of steel plants.

Examples of the comparative inspection include inspection of change in the same to-be-compared large-sized structure at different points in time; i.e., inspection of change in the large-sized structure over time. Examples of the change in the large-sized structure over time include occurrences of rust, deformation, occurrences of cracks, occurrences of loosening of screws, occurrences of lack of parts, modifications, occurrences of change in color, and relative displacements of buildings to the surroundings due to, for example, earthquakes. Further examples of the comparative inspection include inspection of any differences between different to-be-compared large-sized structures of the same kind (same design). Examples of the differences between the different large-sized structures of the same kind (same design) include differences in shape and color that exceed expectable manufacturing errors, and presence or absence of lack of parts.

Also, a scope of the comparative inspection may be the whole or part of the large-sized structure. Hereinafter, the case in which the scope of the comparative inspection is the whole of the large-sized structure will be mainly described.

The inspection assist system 1 includes an inspection assist device 100 and a sensor device 200.

The inspection assist device 100 (one exemplary information processing device) assists the comparative inspection by a user.

The inspection assist device 100 may be, for example, a terminal device utilized by a user (user terminal). The user terminal may be, for example, a stationary terminal device such as a desktop computer terminal. Alternatively, the user terminal may be, for example, a portable (mobile) terminal device (portable terminal) such as a smartphone, a tablet terminal, or a laptop computer terminal.

The inspection assist device 100 includes a control device 110, a communication device 120, an input device 130, and a display device 140.

The control device 110 performs control regarding assist of the comparative inspection by a user. Based on sensing data groups that are incorporated from the sensor device 200; i.e., a sensing data group regarding a shape of one to-be-compared large-sized structure and a sensing data group regarding a shape of the other to-be-compared large-sized structure, the control device 110 provides information for assist of the comparative inspection via the display device 140.

Functions of the control device 110 may be realized by, for example, any hardware or a combination of any hardware and software. The control device 110 is mainly composed of a computer including, for example, a CPU (Central Processing Unit), a memory device, a nonvolatile auxiliary memory device, and an interface device for various inputs and outputs. The control device 110 realizes various functions by, for example, loading a program, which is to be installed in the auxiliary memory device, in the memory device and executing the program on the CPU. Examples of the memory device include SRAMs (Static Random Access Memories) and DRAMs (Dynamic Random Access Memories). Examples of the auxiliary memory device include HDDs (Hard Disc Drives), SSDs (Solid State Drives), and flash memories. The interface device includes, for example, external interfaces for connection to recording media. Thereby, the inspection assist device 100 (control device 110) can incorporate various programs from the recording media via the external interface and install the programs in the auxiliary memory device.

The communication device 120 communicates with an external device (e.g., the sensor device 200) via a predetermined communication line. Thereby, the inspection assist device 100 can exchange data with the external device via the communication device 120. Also, the inspection assist device 100 can incorporate various programs from the external device and install the programs in the control device 110 (auxiliary memory device). The predetermined communication line may be, for example, a one-to-one communication line. Also, the predetermined communication line may include, for example, a local area network (LAN) inside of a facility where a user performs operations regarding the comparative inspection. The local area network may be wired, wireless, or both. Also, the predetermined communication line may include a wide area network (WAN) outside of a facility where a user performs operations regarding the comparative inspection. The wide area network may include, for example, a mobile communication network whose terminals are base stations, a satellite communication network utilizing communication satellites, or the Internet network. Also, the predetermined communication line may include, for example, a near field communication line based on a predetermined wireless communication standard, such as BLUETOOTH (registered trademark) and WiFi.

Note that, functions of the communication device 120 may be incorporated into the control device 110 as the interface device of the control device 110.

The input device 130 receives various inputs from a user of the inspection assist system 1. The input device includes, for example, an operation input device, such as a keyboard, a mouse, a joystick, a touch panel, a touch pad, a button, a toggle, or a lever. Also, the input device 130 may include, for example, a voice-input device that receives a voice input from a user or a gesture-input device that receives a gesture input from a user. Also, the input device 130 may include, for example, a biometric input device that allows for a biometric input from a user by, for example, fingerprint recognition or iris recognition. A signal corresponding to the input content from a user, which is received by the input device 130, is incorporated into the control device 110.

The display device 140 displays an information image regarding the comparative inspection under control of the control device 110. The display device 140 is, for example, a liquid crystal display or an organic EL (Electroluminescence) display.

The sensor device 200 (one exemplary sensor) obtains sensing data regarding the shape of a large-sized structure that is an object for the comparative inspection (hereinafter the above-described sensing data will be referred to simply as "sensing data"). The sensor device 200 is, for example, an image-capture device that is capable of outputting a captured image (image data) of the large-sized structure. The image-capture device may include, for example, a monocular camera, a stereo camera, or a depth camera. Also, the sensor device 200 may be, for example, a distance sensor that is capable of obtaining point cloud data corresponding to the shape of the large-sized structure from the sensor device 200 serving as a reference, such as LIDAR (Light Detecting and Ranging), a millimeter wave radar, or an ultrasonic sensor. Hereinafter, the case in which the sensing data are image data will be mainly described. Also, the sensor device 200 may be an information device (smart device) including an image-capture device, a distance sensor, etc. Examples of the information device include smart phones and tablet terminals. Also, the sensor device 200 may be a drone including an image-capture device, a distance sensor, etc.

The sensor device 200 is communicably connected to the inspection assist device 100 via the predetermined communication line. A collection of sensing data of the large-sized structure obtained by the sensor device 200 (hereinafter the collection will be referred to as a "sensing data group") is incorporated into the inspection assist device 100. For example, the sensor device 200 may be connected by a user to the inspection assist device via a cable (one-to-one communication line) so that the sensing data group may be incorporated into the inspection assist device 100. In an exemplary alternative way, the sensor device 200 transmits the sensing data to the inspection assist device 100 via, for example, a mobile communication network or through, for example, WiFi. Then, the inspection assist device 100 receives the sensing data via the communication device 120. Thereby, the sensing data are incorporated into the inspection assist device 100.

Alternatively, the sensing data group obtained by the sensor device 200 may be incorporated into the inspection assist device 100 via a mobile recording medium. Examples of the mobile recording medium include magnetooptical disks, optical disks, removable hard discs, and flash memories. Examples of the optical disks include media such as writable CDs (Compact Discs), DVDs (Digital Versatile Discs), BDs (BLU-RAY (registered trademark) Discs). Examples of the flash memories include USB (Universal Serial Bus) flash drives (USB memories) and SD memory cards.

### [First example of assist method of comparative inspection]

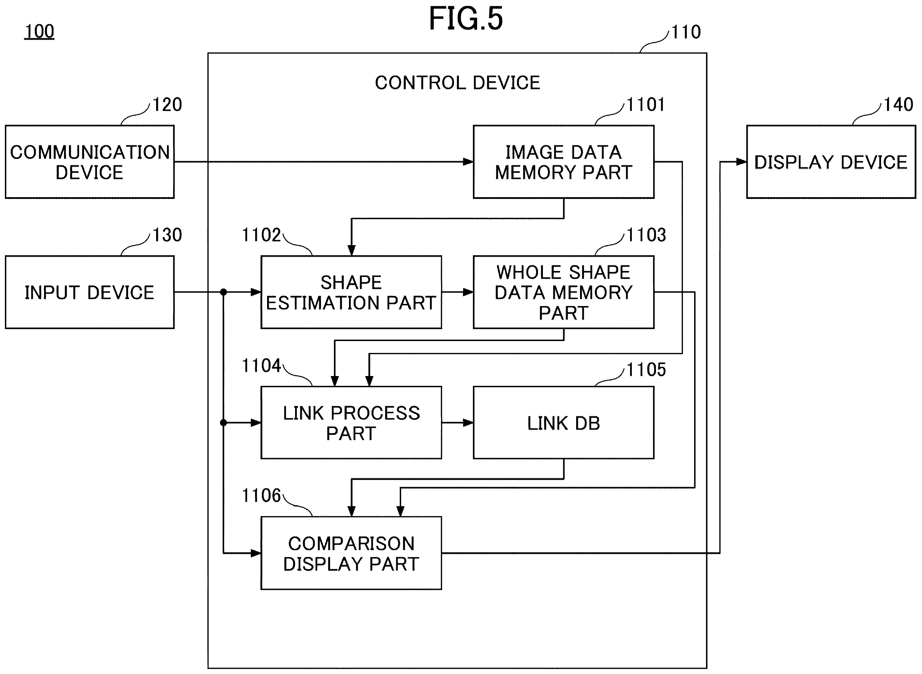

Next, referring to FIG. 5 to FIG. 11, a first example of an assist method of the comparative inspection will be described.

### <Functional configuration of inspection assist device>

FIG. 5 is a functional block diagram of a first example of a configuration of the inspection assist device 100.

As illustrated in FIG. 5, the control device 110 of the inspection assist device 100 includes an image data memory part 1101, a shape estimation part 1102, a whole shape data memory part 1103, a link process part 1104, a link DB (Data Base) 1105, and a comparison display part 1106. These functions are realized by, for example, loading programs, which are to be installed in the auxiliary memory device, in the memory device and executing the programs on the CPU, or by defining predetermined memory regions in the auxiliary memory device.

The image data memory part 1101 stores an image data group of the large-sized structure that is incorporated from the sensor device 200 via the communication device 120.

For example, the image data memory part 1101 stores image data groups of the large-sized structure that are incorporated at different points in time in distinguishable forms based on, for example, addresses. Thereby, when the comparative inspection is performed, the control device 110 (shape estimation part 1102) can appropriately distinguishably read out the image data groups corresponding to two to-be-compared large-sized structures.

Also, for example, the image data memory part 1101 may store a plurality of image data obtained at different points in time in the sensor device 200 without being distinguished for each image data group. In this case, the control device 110 may distinguish the image data groups based on, for example, information of date included in metadata of each of the image data.

In response to a predetermined input (demand) from a user to the input device 130, the shape estimation part 1102 (one exemplary estimation part) estimates (reproduces) the whole shapes (three-dimensional shapes) of respective large-sized structures based on respective image data groups of to-be-compared large-sized structures stored in the image data memory part 1101. Specifically, based on the image data group of the intended large-sized structure, the shape estimation part 1102 generates and outputs data of a three-dimensional model corresponding to the whole shape of the intended large-sized structure (hereinafter the data will be referred to as "whole shape data"). For example, using a publicly known photogrammetric method, the shape estimation part 1102 may create a three-dimensional model representing the whole shape of the large-sized structure based on the image data group of the intended large-sized structure.

The image data group of the intended large-sized structure may include a plurality of image data of the same site that are obtained in a state where the position, the posture, or both of the sensor device 200 are different. For example, the image data group of the intended large-sized structure may include data of a plurality of still images included in a video that is obtained while the sensor device 200 is being moved. Thereby, the shape estimation part 1102 readily estimates the whole shape based on the image data of the same site. Therefore, the control device 110 can improve estimation precision of the whole shape of the intended large-sized structure.

Note that, when the scope of the comparative inspection is a part of the large-sized structure, the shape estimation part 1102 may estimate (reproduce) a three-dimensional shape of the scope corresponding to the part rather than the whole shape of the large-sized structure. Hereinafter, the same applies to the below-described shape estimation part 1102A.

The whole shape data memory part 1103 stores the whole shape data of the large-sized structure output by the shape estimation part 1102.

The link process part 1104 (one exemplary managing part) associates each image data included in the original image data group of the whole shape data with sites of the whole shape data. Specifically, for each of a plurality of sites defined in the whole shape data, the sites of the whole shape data may be associated with the image data in the image data group. For example, the link process part 1104 may divide the whole shape data into any number of sites by a predetermined method, and associate the sites of the whole shape data with the image data in the image data group for each of the sites. Also, for example, the link process part 1104 may divide the whole shape data into a plurality of sites corresponding to previously defined inspection sites of the large-sized structure, and associate the sites of the whole shape data with the image data in the image data group for each of the sites. In this case, for example, the link process part 1104 may divide the whole shape data into a plurality of sites using design data of the large-sized structure and a plurality of inspection sites defined on the design data.

The link DB 1105 registers record data representing association by the link process part 1104 between the sites of the whole shape data and the image data of the original image data group.

The comparison display part 1106 (one exemplary display part) displays, in response to a predetermined input (demand) from a user to the input device 130, image data of common sites of both of the to-be-compared large-sized structures on the display device 140 in a manner that the image data can be compared with each other. Specifically, using the link DB 1105, the comparison display part 1106 may display respective image data on the display device 140 side by side, the respective image data being associated with the corresponding sites (common sites) of the whole shape data of one and the other of the to-be-compared large-sized structures. The common sites mean the same sites. In the absence of sites that are completely the same, the common sites mean sites that are present in a predetermined proximal scope.

For example, when certain image data are selected from the image data group of one large-sized structure by an input from a user to the input device 130, the comparison display part 1106 may display image data of the common sites in the image data group of the other large-sized structure side by side.

Also, for example, the comparison display part 1106 may display, on the display device 140, some or all of combinations of image data in a manner that the combinations can be browsed by scrolling, the image data being associated with the corresponding sites of the whole shape data of both of the to-be-compared large-sized structures.

Also, for example, the comparison display part 1106 may display, on the display device 140, image information representing the whole shapes of both of the to-be-compared large-sized structures (hereinafter the image information will be referred to as a "large-sized structure image"). The large-sized structure images may be, for example, image information schematically representing the whole shape of the large-sized structure. Also, the large-sized structure images may be, for example, images of three-dimensional models corresponding to the whole shape data of both of the to-be-compared large-sized structures. In this case, the image of the three-dimensional model displayed on the display device 140 may be a still image of the three-dimensional model as viewed from a predetermined direction. Also, the image of the three-dimensional model displayed on the display device 140 may be an image that can be changed in point of view and size in response to an input by a user to the input device 130, like a visual interface of a three-dimensional CAD (Computer Aided Design) system. The comparison display part 1106 may display, on the display device 140, combinations of image data associated with sites of the whole shape data of the to-be-compared large-sized structures, the sites being any sites of the large-sized structure image selected by an input from a user to the input device 130.

### <Pre-process regarding assist of comparative inspection>

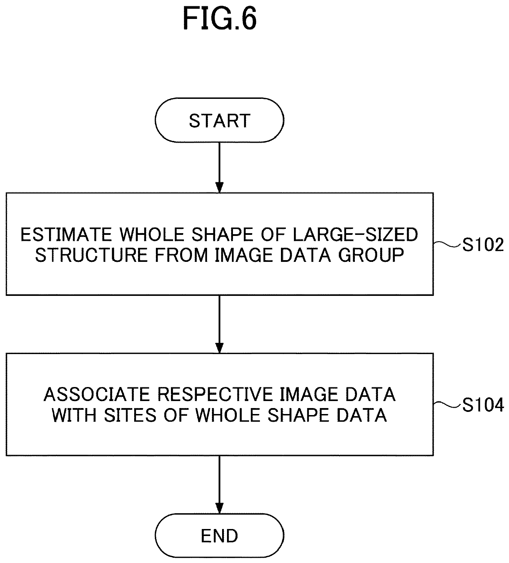

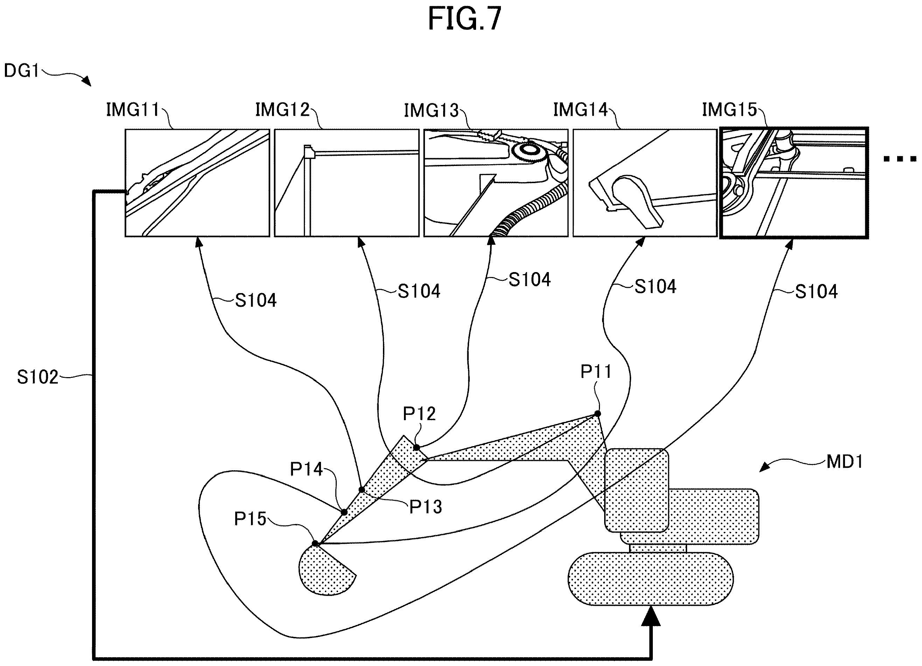

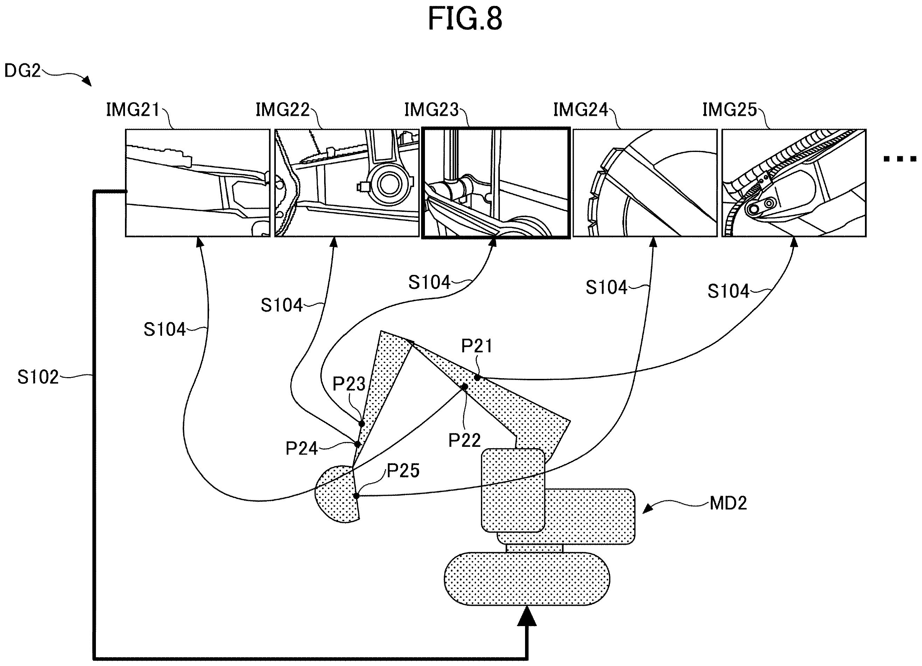

FIG. 6 is a flowchart that schematically illustrates one example of the pre-process regarding assist of the comparative inspection by the control device 110. FIG. 7 and FIG. 8 are schematic explanatory views of contents of the pre-processes regarding assist of the comparative inspection by the control device 110. Specifically, FIG. 7 and FIG. 8 are schematic explanatory views of contents of the pre-processes regarding assist of the comparative inspection based on image data groups DG1 and DG2 of a first shovel and a second shovel as the large-sized structures.

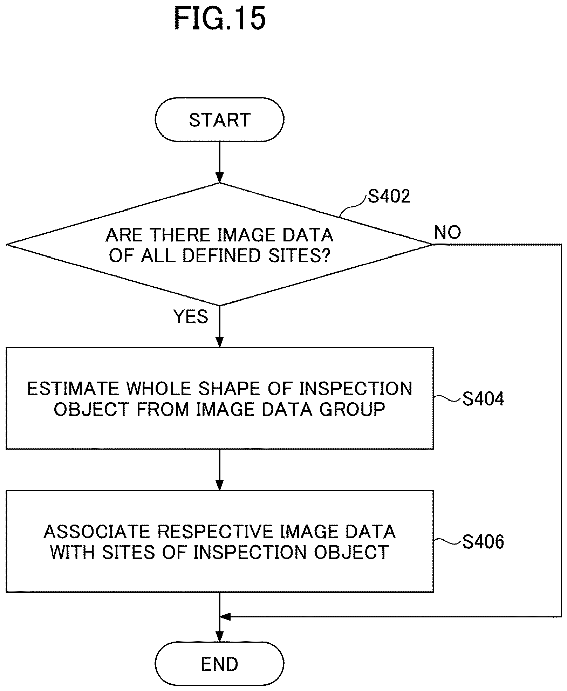

The flowchart of FIG. 6 may be performed, for example, when the image data groups (e.g., the image data groups DG1 and DG2) are incorporated from the sensor device 200 and a selection input to execute the pre-process is made via the input device 130. Also, the flowchart of FIG. 6 may be performed, for example, when a demand input to execute the pre-process is made from a user via the input device 130 and an image data group to be pre-processed is selected by a user via the input device 130. Hereinafter, the same may apply to the below-described flowchart of FIG. 15.

As illustrated in FIG. 6, in step S102, the shape estimation part 1102 estimates the whole shape of the large-sized structure corresponding to the image data group based on the image data group (a plurality of image data included therein) of the large-sized structure, and outputs the whole shape data.

For example, as illustrated in FIG. 7, the shape estimation part 1102 creates a three-dimensional model MD1 as the whole shape data of the first shovel based on image data IMG11, IMG12, IMG13, IMG14, IMG15, ... included in the image data group DG1. The image data group DG1 of the first shovel is obtained in a state where the front end (bucket) of attachments including a boom, an arm, and a bucket is relatively away from the machine body (upper revolving body). Therefore, in the three-dimensional model MD1, the outer shape (shapes of the attachments) of the first shovel corresponding to the state is reproduced.

Also, for example, as illustrated in FIG. 8, the shape estimation part 1102 creates a three-dimensional model MD2 as the whole shape data of the second shovel based on image data IMG21, IMG22, IMG23, IMG24, IMG25, ... included in the image data group DG2. The image data group DG2 of the second shovel is obtained in a state where the front end (bucket) of attachments including a boom, an arm, and a bucket is relatively near the machine body (upper revolving body). Therefore, in the three-dimensional model MD2, the outer shape (shapes of the attachment) of the second shovel corresponding to the state is reproduced.

Referring back to FIG. 6, once the process of step S102 is completed, the control device 110 proceeds to step S104.

In step S104, the link process part 1104 associates respective image data of the image data group with the sites of the whole shape data.

For example, as illustrated in FIG. 7, the link process part 1104 respectively associates the image data IMG11, IMG12, IMG13, IMG14, and IMG15 of the image data group DG1 with sites P13, P11, P12, P15, and P14 of the three-dimensional model MD1.

Also, for example, as illustrated in FIG. 8, the link process part 1104 respectively associates image data IMG21, IMG22, IMG23, IMG24, and IMG25 of the image data group DG2 with sites P22, P24, P23, P25, and P21 of the three-dimensional model MD2.

Note that, in addition to the process of step S104, the control device 110 may associate respective image data of the image data group with other information. For example, the control device 110 may associate image data of an intended object with information regarding specifications of the sensor device 200 (image-capture device), such as an angle of view, for each of the image data of the image data group. Also, for example, the control device 110 may associate image data of an intended object with information regarding a distance from the sensor device 200 (image-capture device) to the captured object (large-sized structure) for each of the image data of the image data group.

Referring back to FIG. 6, once the process of step S104 is completed, the control device 110 ends the process of the flowchart of this time.

As described above, in the present example, the control device 110 can reproduce the three-dimensional shapes of the wholes of the to-be-compared large-sized structures based on the two image data groups of the to-be-compared large-sized structures, and manage the two image data groups so that the common sites of the to-be-compared large-sized structures can be compared with each other.

### <Main process regarding assist of comparative inspection>

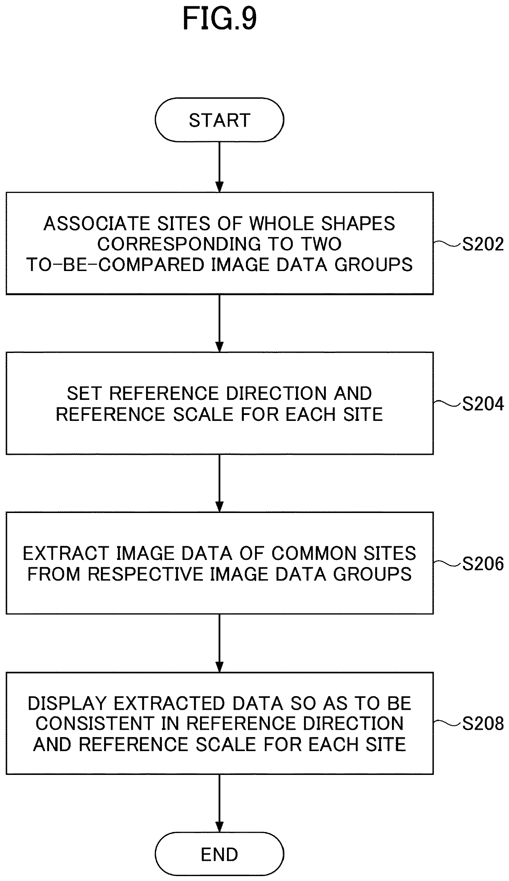

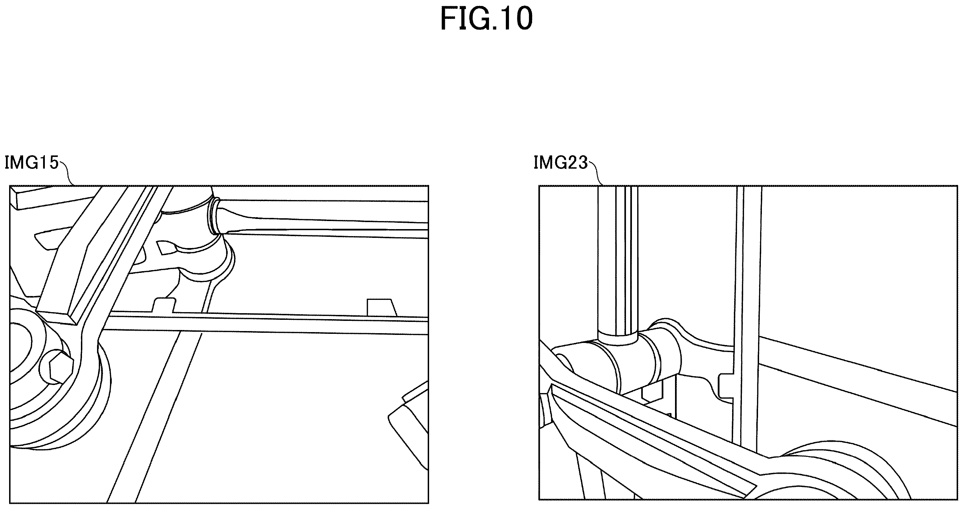

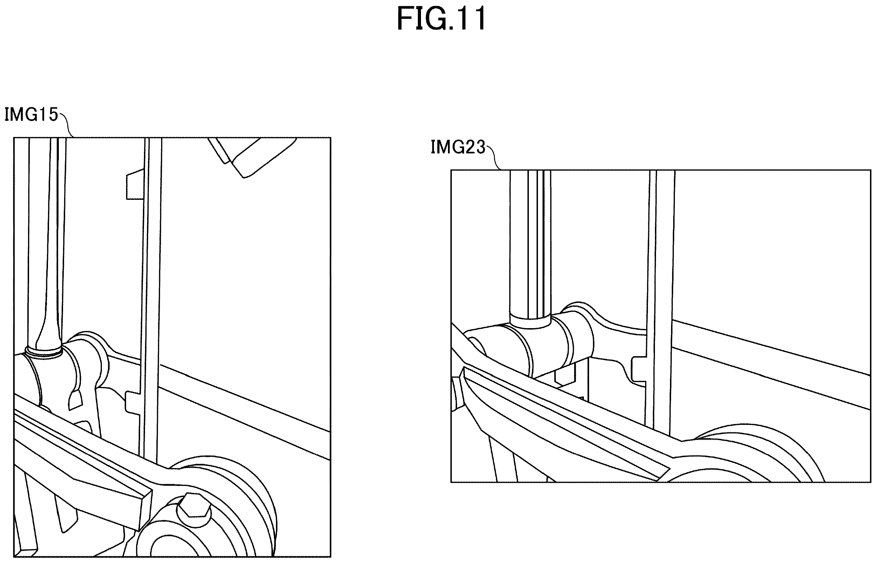

FIG. 9 is a flowchart that schematically illustrates one example of the main process regarding assist of the comparative inspection by the control device 110. FIG. 10 is a view of one example of a combination of the image data of the common sites of to-be-compared large-sized structures, the image data being extracted from the image data group. Specifically, FIG. 10 is a view of one example of a combination of the image data of the common sites of the to-be-compared first and second shovels, the image data being extracted from the image data groups DG1 and DG2 (see FIG. 7 and FIG. 8). FIG. 11 is a view of one example of a combination of the image data of the common sites of the to-be-compared large-sized structures, the image data being displayed on the display device 140. Specifically, FIG. 11 is a view of one example of a combination of the image data of the common sites of the to-be-compared first and second shovels, the image data being displayed on the display device 140.

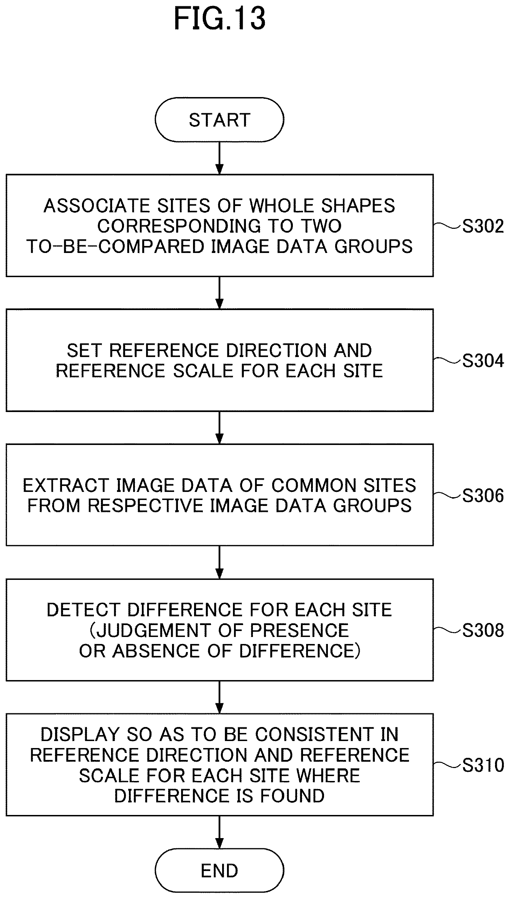

The flowchart of FIG. 9 may be performed, for example, when a demand input to execute the main process regarding assist of the comparative inspection is made from a user via the input device 130 and two image data groups corresponding to to-be-compared large-sized structures are selected. Hereinafter, the same may apply to the below-described flowchart of FIG. 13.

As illustrated in FIG. 9, in step S202, the comparison display part 1106 corresponds associates common sites of the two whole shape data sets with each other, the two whole shape data sets corresponding to two to-be-compared image data groups.

For example, when there are no mobile parts in the large-sized structures, the comparison display part 1106 compares shapes and positions of the two whole shape data sets (e.g., coordinates on the whole shape data) to associate common sites of the two whole shape data sets with each other.

Also, for example, when there are mobile parts in the large-sized structures, the comparison display part 1106 refers to design data of the large-sized structure to associate common sites of the mobile parts of the two whole shapes with each other based on, for example, the shape, position, and mobile range of the mobile part.

As illustrated in FIG. 7 and FIG. 8, in the first shovel and the second shovel, the attachments (boom, arm, and bucket) are the mobile parts as described above. Therefore, the three-dimensional model MD1 corresponding to the first shovel and the three-dimensional model MD2 corresponding to the second shovel are totally different in shapes of the attachments. Thus, referring to the design data, the comparison display part 1106 can associate common sites of the first shovel and the second shovel with each other. Specifically, the comparison display part 1106 can associate, as common sites, a site P14 of the attachment (arm) in the three-dimensional model MD1 with a site P23 of the attachment (arm) in the three-dimensional model MD2.

Referring back to FIG. 9, once the process of step S202 is completed, the control device 110 proceeds to step S204.

In step S204, the comparison display part 1106 sets a common direction (hereinafter referred to as a "reference direction") and a common scale (hereinafter referred to as a "reference scale") for each of the common sites of the two whole shape data sets that are associated with each other in step S202.

For example, the reference direction is defined as a direction as viewed from each of the common sites of the two whole shape data sets. In other words, the reference direction is defined on a coordinate system that is fixed to each of the common sites of the two whole shape data sets. Thereby, for example, when the common sites correspond to the mobile parts of the to-be-compared large-sized structures, it is also possible to move the reference direction in accordance with motions of the mobile parts of the large-sized structures. Therefore, for example, even when the shapes (postures) of the attachments that are the mobile parts are totally different as in the above-described first and second shovels, the reference direction as viewed from the common sites can be made uniform between the two whole shape data sets.

Once the process of step S204 is completed, the control device 110 proceeds to step S206.

In step S206, the comparison display part 1106 extracts image data associated with the common sites from each of the two image data groups for each of the common sites of the two whole shape data sets.

For example, as illustrated in FIG. 10, the comparison display part 1106 extracts, from the image data groups DG1 and DG2, image data IMG15 and IMG23 associated with the site P14 of the three-dimensional model MD1 and the site P23 of the three-dimensional model MD2, which are the common sites.

Referring back to FIG. 9, once the process of step S206 is completed, the control device 110 proceeds to step S208.

In step S208, the comparison display part 1106 displays, on the display device 140, a combination of the extracted image data so as to be consistent in the reference direction and the reference scale for each of the common sites of the two whole shape data sets.

For example, as illustrated in FIG. 11, the comparison display part 1106 displays the image data IMG15 and IMG23 so as to be consistent in the reference direction and the reference scale. Specifically, in the present example, the direction and size of the image of the image data IMG15 are modified, and the reference direction and the reference scale of the image data IMG15 and IMG23 are made uniform.

Referring back to FIG. 9, once the process of step S208 is completed, the control device 110 ends the process of the flowchart of this time.

In this way, in the present example, based on the two image data groups that are managed as described above, the control device 110 can specifically display, on the display device 140, a combination of image data of the two image groups corresponding to the common sites of the to-be-compared large-sized structures so that the combination of the image data can be compared. Thereby, a user can compare the two image data sets corresponding to the common sites of the to-be-compared large-sized structures and inspect change of the same large-sized structure over time or any differences between the large-sized structures of the same design (the same kind).

### [Second example of assist method of comparative inspection]

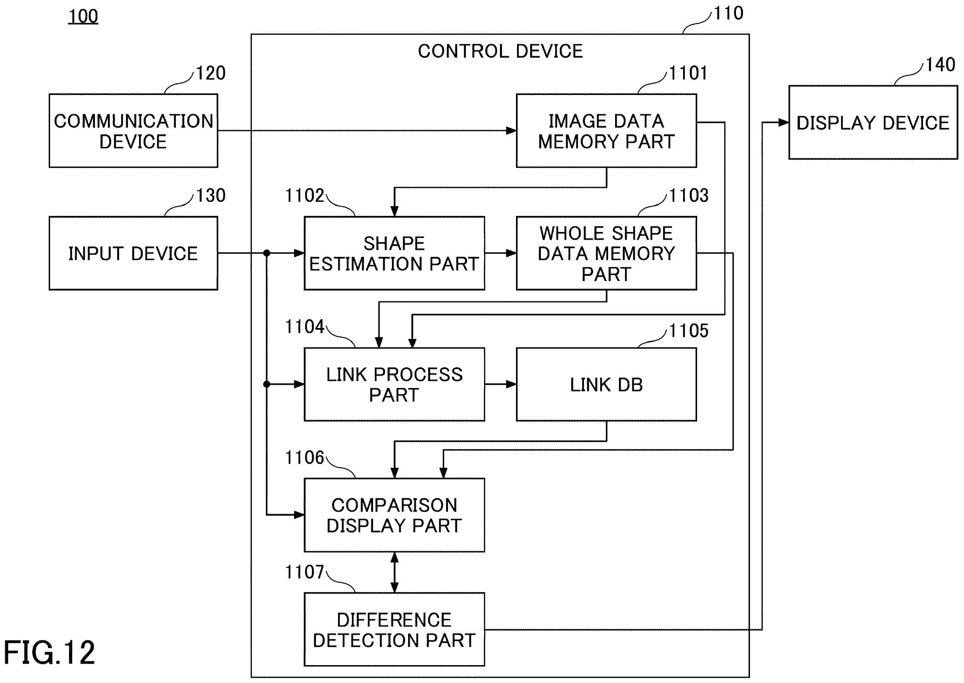

Next, referring to FIG. 12 and FIG. 13, a second example of an assist method of the comparative inspection will be described. Hereinafter, differences from the above-described first example will be mainly described, and description of the same or corresponding contents may be simplified or omitted.

### <Functional configuration of inspection assist device>

FIG. 12 is a functional block diagram of another example of a configuration of the inspection assist device 100.

As illustrated in FIG. 12, the control device 110 of the inspection assist device 100 includes the image data memory part 1101, the shape estimation part 1102, the whole shape data memory part 1103, the link process part 1104, the link DB 1105, the comparison display part 1106, and a difference detection part 1107. These functions are realized by, for example, loading programs, which are to be installed in the auxiliary memory device, in the memory device and executing the programs on the CPU, or by defining predetermined memory regions in the auxiliary memory device.

The difference detection part 1107 (one exemplary detection part) detects any differences within a combination of image data corresponding to common sites, the image data being extracted from two image data groups corresponding to to-be-compared large-sized structures.

For example, the difference detection part 1107 may recognize (detect) any differences that are defined for each site (e.g., scratches, dents, postures in which predetermined parts are attached, and the presence or absence of predetermined parts) by, for example, using discriminators based on already known image processing techniques and machine learning.

Also, for example, the difference detection part 1107 may previously attach labels representing features regarding differences (i.e., impart attribute data regarding differences) to all of the image data of each of the two image data groups corresponding to to-be-compared large-sized structures. The labels representing features regarding differences may include, for example, a label indicating the presence of a scratch, a label indicating the presence of a dent, and a label indicating lack of a part. Specifically, the difference detection part 1107 recognizes the presence or absence of a feature corresponding to the label of interest for all of the image data of each of the two image data groups by, for example, using discriminators based on already known image processing techniques and machine learning. When the feature corresponding to the label is present, the difference detection part 1107 imparts the label of interest as metadata to the image data. Thereby, the difference detection part 1107 can detect any differences within the combination of image data corresponding to the common sites based on the difference between the imparted labels.

Also, the difference detection part 1107 may classify (group) all of the common sites of the two whole shape data sets corresponding to the to-be-compared large-sized structures in accordance with contents of the differences, extents of the differences, or both. Thereby, the control device 110 (comparison display part 1106) can limit all of the common sites to specific groups and display combinations of image data corresponding to the common sites on the display device 140. Therefore, a user can select a specific group using the input device 130 and limit sites regarding which combinations of image data are to be displayed, to sites where differences of specific contents occur, sites where extents of differences are beyond predetermined references, etc. Therefore, the control device 110 can increase convenience for a user and efficiency of the comparative inspection.

### <Main process regarding assist of comparative inspection>

FIG. 13 is a flowchart that schematically illustrates another example of the main process regarding assist of the comparative inspection by the control device 110.

As illustrated in FIG. 13, steps S302 to S306 are the same as steps S202 to S206 in FIG. 9, and thus description thereof will be omitted.

Once the process of step S306 is completed, the control device 110 proceeds to step S308.

In step S308, the difference detection part 1107 detects any differences within a combination of image data extracted in step S306 for each of the common sites of the two whole shape data sets.

Once the process of step S308 is completed, the control device 110 proceeds to step S310.

In step S310, the comparison display part 1106 displays, on the display device 140, a combination of image data so as to be consistent in the reference direction and the reference scale for each of the sites where any differences are detected.

For example, the comparison display part 1106 may display a combination of image data so as to emphasize any differences between the image data. Specifically, the comparison display part 1106 may display markers in parts of the image data in which any differences occur between one set of the image data and the other set of the image data. Also, when any features (e.g., scratches or dents) absent in one set of the image data occur in the other set of the image data, the comparison display part 1106 may perform image processing for display so as to enable the features of the other set of the image data to be further noticeable (e.g., so as to increase the quantity of scratches or dents).

Also, for example, similar to the above-described example, the comparison display part 1106 may also display a large-sized structure image on the display device 140. Then, for display, the comparison display part 1106 may associate information regarding the differences (e.g., summarized information representing contents and extents of the differences) with sites of the large-sized structure image that correspond to the sites where the differences are detected.

Once the process of step S310 is completed, the control device 110 ends the process of the flowchart of this time.

In this way, in the present example, based on the two image data groups that are managed as described above, the control device 110 detects any differences between the common sites of the to-be-compared large-sized structures. Then, regarding sites where the differences occur in the common sites of the to-be-compared large-sized structures, the control device 110 displays, on the display device 140, the image data of the two image data groups so that the image data can be compared. Thereby, it is enough for a user to confirm only the combinations of the image data in which the differences occur. Therefore, the control device 110 can increase convenience for a user and efficiency of the comparative inspection.

### [Third example of assist method of comparative inspection]

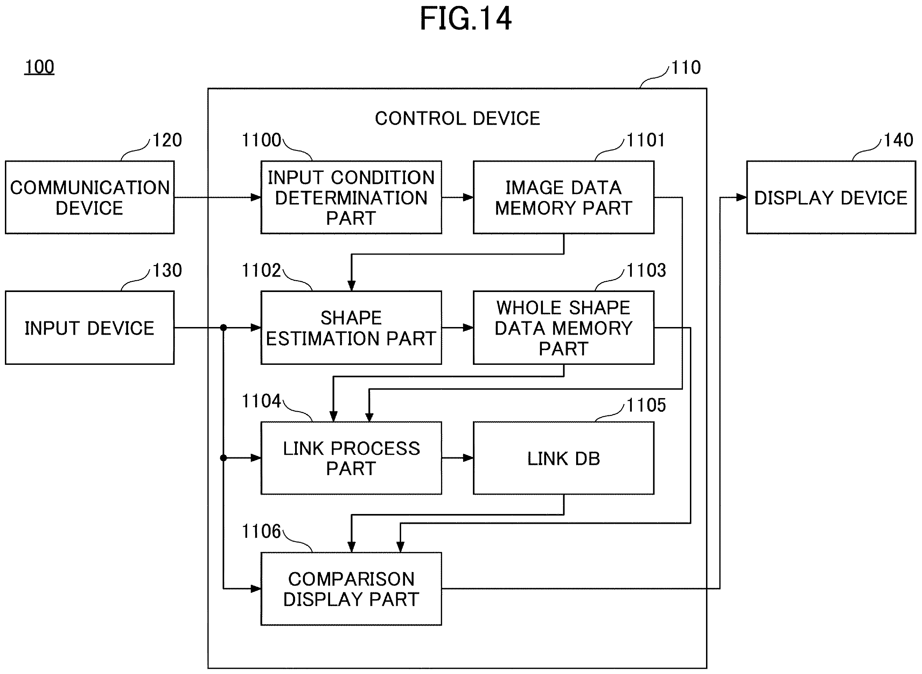

Next, referring to FIG. 14 and FIG. 15, a third example of an assist method of the comparative inspection will be described. Hereinafter, differences from the above-described first and other examples will be mainly described, and description of the same or corresponding contents may be simplified or omitted.

### <Functional configuration of inspection assist device>

FIG. 14 is a functional block diagram of a third example of a configuration of the inspection assist device 100.

As illustrated in FIG. 14, the control device 110 of the inspection assist device 100 includes an input condition determination part 1100, the image data memory part 1101, the shape estimation part 1102, the whole shape data memory part 1103, the link process part 1104, the link DB 1105, and the comparison display part 1106. These functions are realized by, for example, loading programs, which are to be installed in the auxiliary memory device, in the memory device and executing the programs on the CPU, or by defining predetermined memory regions in the auxiliary memory device.

Note that, in the present example (FIG. 14), although the input condition determination part 1100 is added to the above example (FIG. 6), the input condition determination part 1100 may be added to the above other example (FIG. 12).

The input condition determination part 1100 (one exemplary determination part) determines whether the image data group of the large-sized structure incorporated from the sensor device 200 via the communication device 120 satisfies predetermined input conditions. The predetermined input conditions are, for example, that the incorporated image data group includes image data of all of the defined sites of the large-sized structure (e.g., all of the inspection sites) (exemplary predetermined sites).

When the input condition determination part 1100 determines that the image data group satisfies the input conditions, the image data group is stored in the image data memory part 1101. Meanwhile, when the input condition determination part 1100 determines that the image data group does not satisfy the input conditions, the image data group is discarded. Alternatively, when the input condition determination part 1100 determines that the image data group does not satisfy the input conditions, the image data group may be stored in the image data memory part 1101 as an image data group that cannot be used for the comparative inspection. Also, it may be possible, via the display device 140, to request of a user additional data for satisfying the input conditions. In this case, the additional data are incorporated from the sensor device 200, and combined with the already incorporated data. When the combined image data group of the additional data and the already incorporated data satisfy the input conditions, the image data group may be stored in the image data memory part 1101 as image data that can be used for the comparative inspection.

### <Pre-process regarding assist of comparative inspection>

FIG. 15 is a flowchart that schematically illustrates another example of the pre-process regarding assist of the comparative inspection.

As illustrated in FIG. 15, in step S402, the input condition determination part 1100 determines whether the incorporated image data group includes image data of all of the defined sites of the large-sized structure. When the incorporated image data group includes image data of all of the defined sites of the large-sized structure, the input condition determination part 1100 proceeds to step S404. In any other cases, the process of the flowchart of this time is ended.

Steps S404 and S406 are the same as the processes of steps S102 and S204 in FIG. 6, and thus description thereof will be omitted.

Once the process of step S406 is completed, the control device 110 ends the process of the flowchart of this time.

As described above, in the present example, the control device 110 can determine whether the image data group incorporated from the sensor device 200 includes image data of the defined sites of the to-be-compared large-sized structures. Therefore, the control device 110 can facilitate a user to prepare image data groups with which the comparative inspection can be appropriately performed.

### [Fourth example of assist method of comparative inspection]

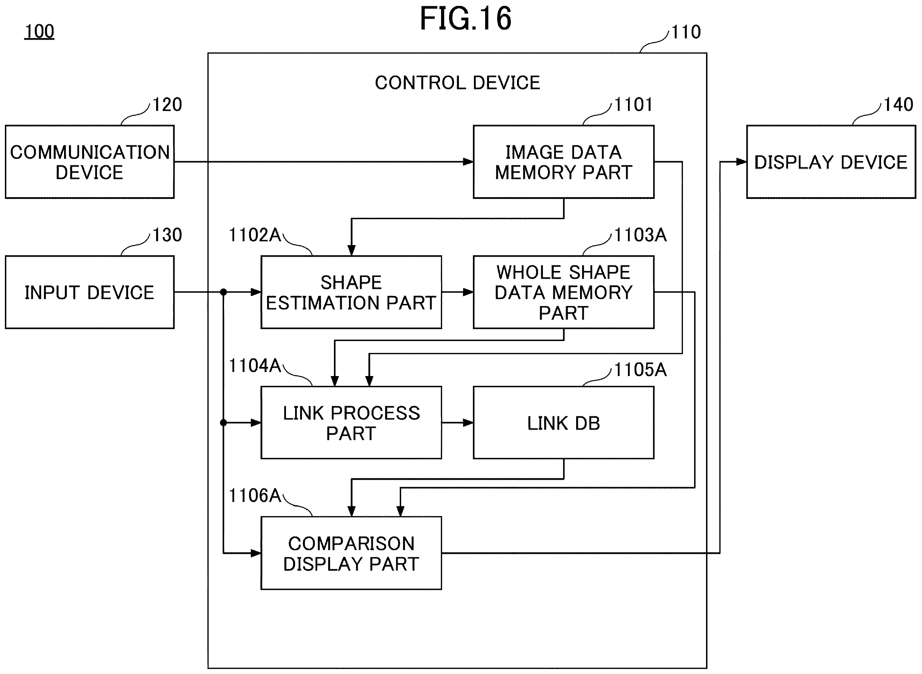

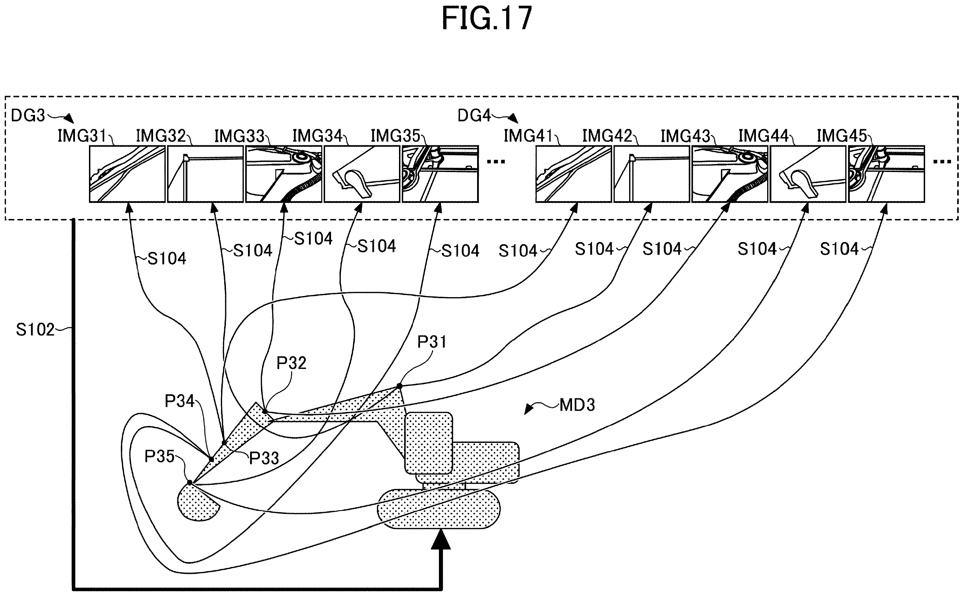

Next, referring to FIG. 16 and FIG. 17, a fourth example of an assist method of the comparative inspection will be described. Hereinafter, differences from the above-described first and other examples will be mainly described, and description of the same or corresponding contents may be simplified or omitted.

### <Functional configuration of inspection assist device>

FIG. 16 is a functional block diagram of a fourth example of a configuration of the inspection assist device 100.

As illustrated in FIG. 16, the control device 110 of the inspection assist device 100 includes the image data memory part 1101, the shape estimation part 1102A, the whole shape data memory part 1103A, the link process part 1104A, the link DB 1105A, and the comparison display part 1106A.

In response to a predetermined input (demand) from a user to the input device 130, the shape estimation part 1102A (one exemplary estimation part) combines the image data groups of both of the to-be-compared large-sized structures stored in the image data memory part 1101, thereby roughly estimating (reproducing) the whole shapes (three-dimensional shapes) of both of the large-sized structures. In other words, based on the image data groups of both of the to-be-compared large-sized structures, the shape estimation part 1102A estimates, assuming that both of the large-sized structures are the same large-sized structure (hereinafter referred to as "the same large-sized structure" for the sake of convenience), the whole shape (three-dimensional shape) of the same large-sized structure.

For example, when there are mobile parts in the large-sized structures, the shape estimation part 1102A refers to the design data of the large-sized structures. Thereby, the shape estimation part 1102A can estimate the whole shape of the same large-sized structure while correcting differences due to the mobile parts between the three-dimensional shape based on the image data group of one large-sized structure and the three-dimensional shape based on the image data group of the other large-sized structure.

In the present example, it is enough to be able to estimate the whole shape of the same large-sized structure by combining the image data group of one to-be-compared large-sized structure and the image data group of the other to-be-compared large-sized structure. In other words, the image data group of one to-be-compared large-sized structure and the image data group of the other to-be-compared large-sized structure need not be collections of image data that are across the whole scopes of the large-sized structures and of a density such that each of the image data groups is enough to estimate the whole shape of the same large-sized structure. For example, the image data group of one large-sized structure may be a collection of dense image data across the whole scope of the large-sized structure, and the image data group of the other large-sized structure may be a collection of image data in a limited scope of the other large-sized structure or coarse image data thereof. Also, for example, the whole shape data of the same large-sized structure may be estimated based on the image data group of one large-sized structure as a collection of dense image data across the whole scope of the large-sized structure, and only one image data of the other to-be-compared large-sized structure. Thereby, for example, a user can perform the comparative inspection using only an image data of a specific site to be compared with one large-sized structure.

The whole shape data memory part 1103A stores the whole shape data of the same large-sized structure estimated (generated) by the shape estimation part 1102A.

The link process part 1104A (one exemplary managing part) associates the original image data group of the whole shape data of the same large-sized structure (each of the image data groups of both of the to-be-compared large-sized structures) with sites of the whole shape data of the same large-sized structure.

The link DB 1105A registers record data representing association by the link process part 1104 between the sites of the whole shape data and the image data of the original image data group.

Similar to the above-described first and other examples, in response to a predetermined input (demand) from a user, the comparison display part 1106A (one exemplary display part) displays, on the display device 140, the image data of the same sites (common sites) of both of the to-be-compared large-sized structures in a manner that the image data can be compared with each other. Specifically, the comparison display part 1106A may display, on the display device 140, the image data of both of the to-be-compared large-sized structures that are associated with the common sites of the whole shape data of the same large-sized structure using the link DB 1105A.

### <Pre-process regarding assist of comparative inspection>

FIG. 17 is a schematic explanatory view of contents of the pre-process regarding assist of the comparative inspection by the control device 110. Specifically, FIG. 17 is a schematic explanatory view of contents of the pre-process regarding assist of the comparative inspection based on the image data groups DG3 and DG4 of the first shovel and the second shovel, which are the large-sized structures.

In the present example, the inspection assist device 100 (control device 110) can perform the pre-process regarding assist of the comparative inspection through a similar process to that in the above-described first example (FIG. 6).

As illustrated in FIG. 6, in step S102, the shape estimation part 1102A estimates the whole shape of the same large-sized structure based on the image data groups of both of the to-be-compared large-sized structures, and outputs the whole shape data.

For example, as illustrated in FIG. 17, the shape estimation part 1102A creates a three-dimensional model MD3 as the whole shape data of the same large-sized structure (the same shovel) corresponding to the first shovel and the second shovel, based on image data IMG31, IMG32, IMG33, IMG34, IMG35, ... included in the image data group DG3 and image data IMG41, IMG42, IMG43, IMG44, IMG45 ... included in the image data group DG4.

Referring back to FIG. 6, once the process of step S102 is completed, the control device 110 proceeds to step S104.

In step S104, the link process part 1104A associates respective image data of the image data groups of both of the to-be-compared large-sized structures with the sites of the same large-sized structure.

For example, as illustrated in FIG. 16, the link process part 1104A respectively associates image data IMG31, IMG32, IMG33, IMG34, and IMG35 of the image data group DG3 with sites P33, P31, P32, P35, and P34 of the three-dimensional model MD3. Also, the link process part 1104A respectively associates image data IMG41, IMG42, IMG43, IMG44, and IMG45 of the image data group DG4 with sites P33, P31, P32, P35, and P34 of the three-dimensional model MD3. Thereby, for example, a user can compare the common sites (same sites) of the to-be-compared first and second shovels by comparing the image data of the image data groups DG3 and DG4 that are associated with the same sites P31 to P35.

Referring back to FIG. 6, once the process of step S104 is completed, the control device 110 ends the process of the flowchart of this time.

In this way, in the present example, based on the two image data groups of the to-be-compared large-sized structures, the control device 110 can reproduce the whole three-dimensional shape of the same large-sized structure and manage the two image data groups so that the common sites of the to-be-compared large-sized structures can be compared with each other.

### <Main process regarding assist of comparative inspection>

In the present example, the inspection assist device 100 (control device 110) can perform the pre-process regarding assist of the comparative inspection through the same process as the process of the above-described first example (FIG. 9) except that step S202 is omitted. In the present example, step S202 is omitted because, as described above, the image data of the two image data groups of the to-be-compared large-sized structures have been already associated with each other for the common sites of the same whole shape data.

In this way, in the present example, similar to the above-described first and other examples, based on the two image data groups that are managed as described above, the control device 110 can specifically display, on the display device 140, a combination of image data of the two image groups corresponding to the common sites of the to-be-compared large-sized structures so that the combination of the image data can be compared. Thereby, a user can compare the two image data sets corresponding to the common sites of the to-be-compared large-sized structures and inspect change of the same large-sized structure over time or any differences between the large-sized structures of the same design (the same kind).

### [Fifth example of assist method of comparative inspection]

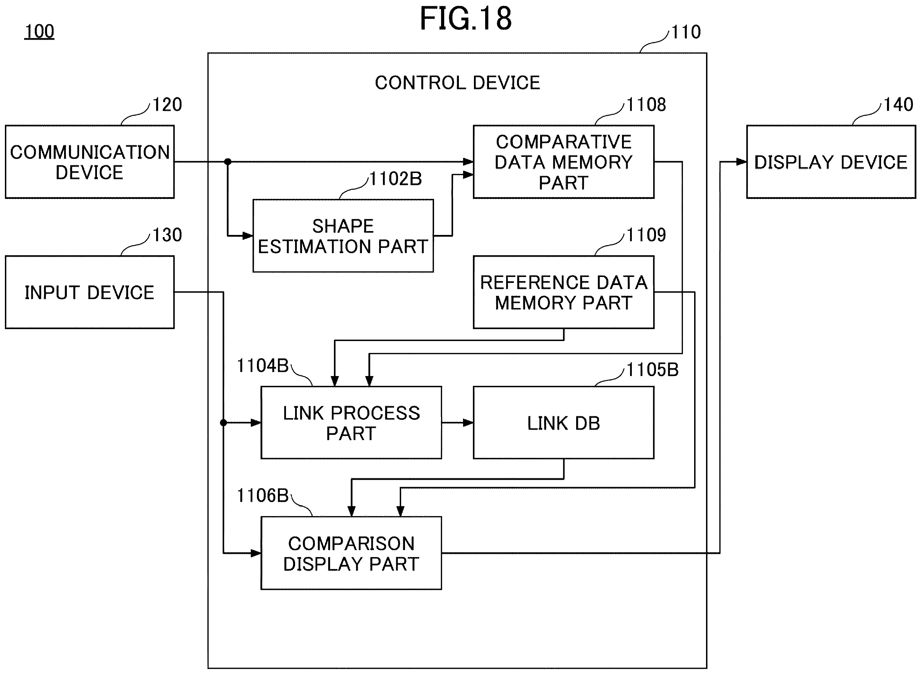

Next, referring to FIG. 18 to FIG. 22, a fifth example of an assist method of the comparative inspection will be described. Hereinafter, differences from the above-described first and other examples will be mainly described, and description of the same or corresponding contents may be simplified or omitted.

In the present example, one to-be-compared large-sized structure can be fixed, and only the other to-be-compared large-sized structure can be changed. When the comparative inspection is inspection of change of the large-sized structure over time, one of the to-be-compared large-sized structure is, for example, a large-sized structure that has just been completed (a brand-new product).

### <Functional configuration of inspection assist device>

FIG. 18 is a functional block diagram of a fifth example of a configuration of the inspection assist device 100.

As illustrated in FIG. 18, the control device 110 of the inspection assist device 100 includes the shape estimation part 1102B, a comparative data memory part 1108, a reference data memory part 1109, the link process part 1104B, the link DB 1105B, and the comparison display part 1106B.

The shape estimation part 1102B estimates (reproduces), based on the image data or image data group of the other to-be-compared large-sized structure, a three-dimensional shape in a scope corresponding to the image data or image data group of the other to-be-compared large-sized structure.

Note that, the shape estimation part 1102B may be omitted.

The comparative data memory part 1108 stores image data and three-dimensional shape data of the other to-be-compared large-sized structure. Hereinafter, the image data, three-dimensional shape data, etc. of the other to-be-compared large-sized structure may be collectively or individually referred to as "comparative data".

The reference data memory part 1109 previously stores an image data group and three-dimensional shape data of the whole shape (whole shape data) of one to-be-compared large-sized structure. The image data included in the image data group as reference data are previously specified for corresponding sites of the whole shape data as the reference data. The reference data memory part 1109 also stores record data representing association thereof. Hereinafter, image data of one to-be-compared large-sized structure, and an image data group, the whole shape data, etc. as collections thereof may be collectively or individually referred to as "reference data".

The whole shape data of one to-be-compared large-sized structure as the reference data may be, for example, estimated (generated) based on the image data group of one large-sized structure, or may be three-dimensional CAD (Computer Aided Design) data of one large-sized structure. In the former case, the whole shape data of one large-sized structure may be estimated (generated) by the shape estimation part 1102B, or may be obtained via the communication device 120 from the outside of the inspection assist device 100. In the latter case, the three-dimensional CAD data of one large-sized structure may be, for example, data generated at the times of design, development, etc. of the large-sized structure, or may be obtained via the communication device 120 from the outside of the inspection assist device 100.

The link process part 1104B (one exemplary managing part) associates the image data group and the whole shape data (reference data) of one large-sized structure with the image data (group) and the three-dimensional shape data (comparative data) of the other to-be-compared large-sized structure in a manner that the common sites of both of the to-be-compared large-sized structures can be compared with each other.

Specifically, using an already known checking (matching) technique, the link process part 1104B may perform checking (matching) between the image data group and the whole shape data (reference data) of one large-sized structure and the image data of the other large-sized structure. Also, the link process part 1104B may perform checking (matching) between the image data group and the whole shape data (reference data) of one large-sized structure and the three-dimensional shape data of the other large-sized structure. Also, the link process part 1104B may optimize the checking (matching) results between both thereof. Thereby, the link process part 1104B can associate the image data of the other large-sized structure with common sites in the whole shape data of one large-sized structure, the common sites being common to the other large-sized structure corresponding to the image data. Also, the link process part 1104B can associate the image data of the other large-sized structure with image data of one large-sized structure, the image data being associated with the common sites in the whole shape data of one large-sized structure. Also, the link process part 1104B can associate the three-dimensional shape data of the other large-sized structure with common sites in the whole shape data of one large-sized structure, the common sites being common to the other large-sized structure corresponding to the three-dimensional shape data. Also, the link process part 1104B can associate the three-dimensional shape of the other large-sized structure with image data of one large-sized structure, the image data being associated with the common sites in the whole shape of one large-sized structure.

The link DB 1105B registers record data representing association by the link process part 1104B.

In response to a predetermined input (demand) from a user to the input device 130, the comparison display part 1106B (one exemplary display part) displays, on the display device 140, image data or three-dimensional shape data corresponding to the common sites of both of the to-be-compared large-sized structures in a manner that the image data or the three-dimensional shape data can be compared with each other. Alternatively, the comparison display part 1106B may display, on the display device 140, image data of one large-sized structure and three-dimensional shape data of the other large-sized structure or three-dimensional shape data of one large-sized structure and image data of the other large-sized structure in a manner that the image data and the three-dimensional shape data can be compared with each other, the image data and the three-dimensional shape data corresponding to the common sites of both of the to-be-compared large-sized structures.

### <Pre-process regarding assist of comparative inspection>

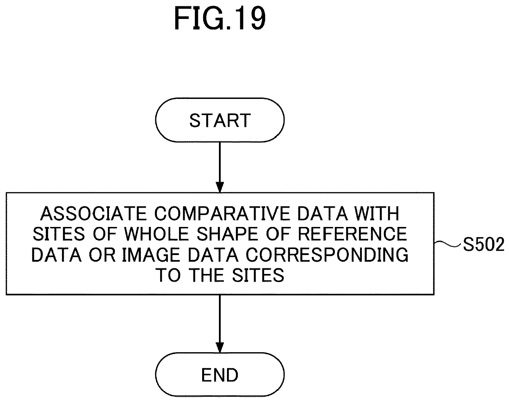

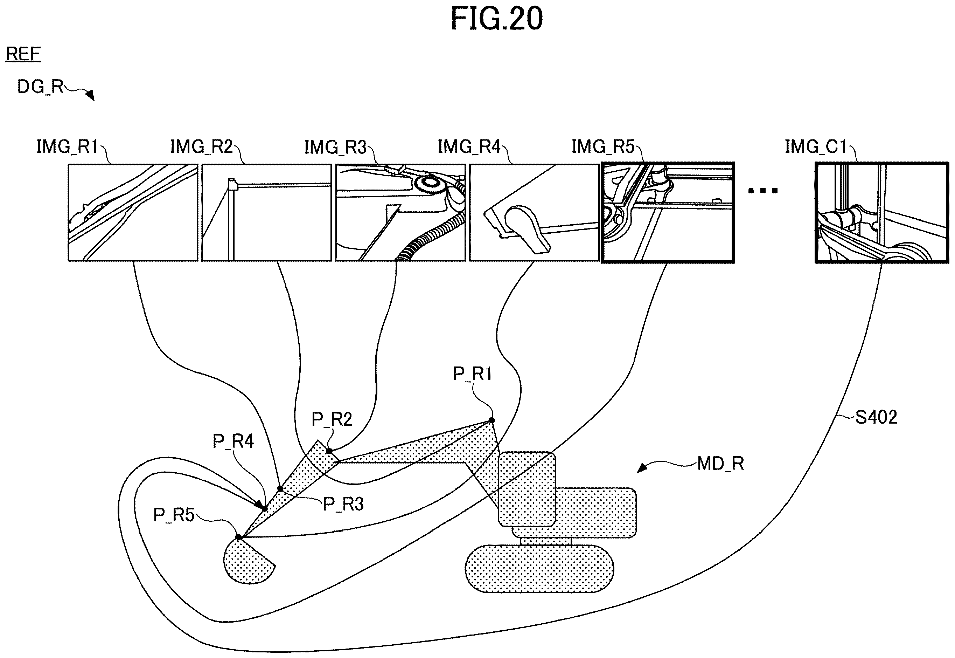

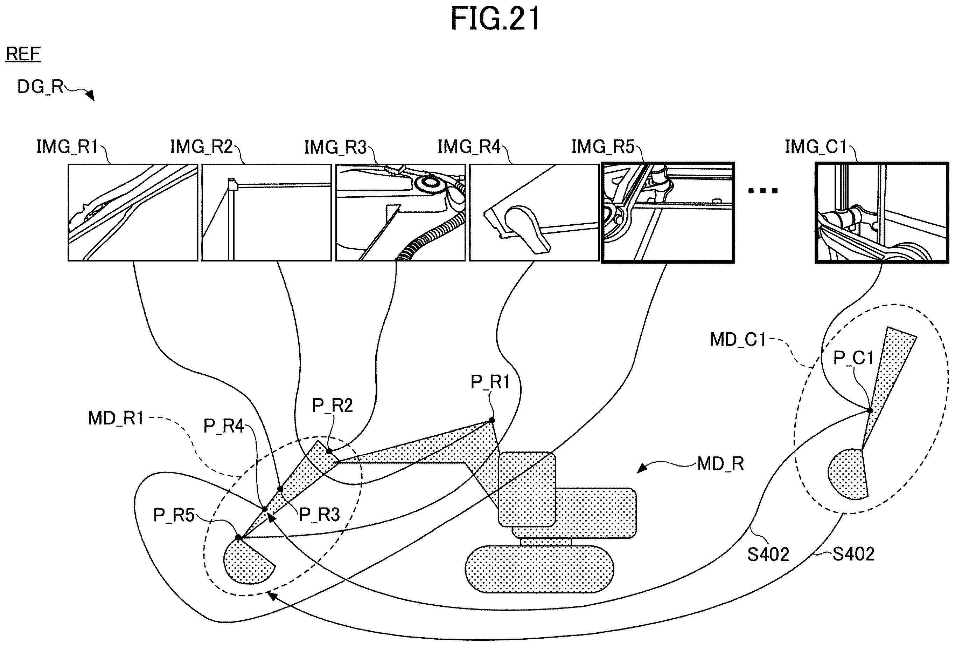

FIG. 19 is a flowchart that schematically illustrates still another example of the pre-process regarding assist of the comparative inspection by the control device 110. FIG. 20 and FIG. 21 are schematic explanatory views of contents of the pre-processes regarding assist of the comparative inspection by the control device 110. Specifically, FIG. 20 is a schematic explanatory view of contents of the pre-process regarding assist of the comparative inspection based on reference data REF of the first shovel as one large-sized structure and image data IMG_C1 of the second shovel as the other large-sized structure. FIG. 21 is a schematic explanatory view of contents of the pre-process regarding assist of the comparative inspection based on reference data REF of the first shovel as one large-sized structure, and image data IMG_C1 and three-dimensional model MD_C1 (comparative data) of the other large-sized structure.

In the examples of FIG. 20 and FIG. 21, the reference data REF include image data group DG_R of the first shovel, and three-dimensional model MD_R corresponding to the whole shape data. Also, in the present example, image data IMG_R1, IMG_R2, IMG_R3, IMG_R4, and IMG_R5 included in the reference data REF are previously associated with sites P_R3, P_R1, P_R2, P_R5, and P_R4 of the three-dimensional model MD_R, respectively. Also, the comparative data are image data IMG_C1 in the example of FIG. 20. In the example of FIG. 21, the comparative data include the image data IMG_C1 and the three-dimensional model MD_C1 including a site (arm) of the second shovel corresponding to the image data IMG_C1. The three-dimensional model MD_C1 corresponds to an arm and a bucket of the second shovel.

As illustrated in FIG. 19, in step S502, the link process part 1104B associates the comparative data (e.g., the image data of the other large-sized structure) with sites of the whole shape of the reference data (the whole shape data).

For example, as illustrated in FIG. 20, the link process part 1104B may associate the image data IMG_C1 with the site P_R4 of the three-dimensional model MD_R through checking (matching) between the image data IMG_C1 and the three-dimensional model MD_R. Also, the link process part 1104B may associate the image data IMG_C1 with the image data IMG_R5 of the reference data REF (image data group DG_R). This is because the image data IMG_R5 of the reference data REF (image data group DG_R) are previously associated with the site P_R4 of the three-dimensional model MD_R with which the image data IMG_C1 have been associated.

Also, for example, as illustrated in FIG. 21, the link process part 1104B may associate the three-dimensional model MD_C1 with the three-dimensional model MD_R1 through checking (matching) between the three-dimensional model MD_C1 of the second shovel and the three-dimensional model MD_R of the first shovel. The three-dimensional model MD_C1 corresponds to common sites (arm and bucket) to the three-dimensional model MD_C1 in the first shovel, the common sites being parts of the three-dimensional model MD_R representing the whole shape of the first shovel. Also, the link process part 1104B may associate the image data IMG_C1 corresponding to the site P_C1 of the three-dimensional model MD_C1, with the site P_R4 that is a common site to the site P_C1 in the three-dimensional model MD_R1. Also, the link process part 1104B may associate the image data IMG_C1 of the second shovel with the image data IMG_R5 of the first shovel corresponding to the site P_R4 of the three-dimensional model MD _R1.

Referring back to FIG. 19, once the process of step S502 is completed, the control device 110 ends the process of the flowchart of this time.

In this way, using the reference data of one to-be-compared large-sized structure, the control device 110 can manage a relation between the reference data of one to-be-compared large-sized structure and the comparative data of the other large-sized structure so that the common sites of the to-be-compared large-sized structures can be compared with each other.

### <Main process regarding assist of comparative inspection>

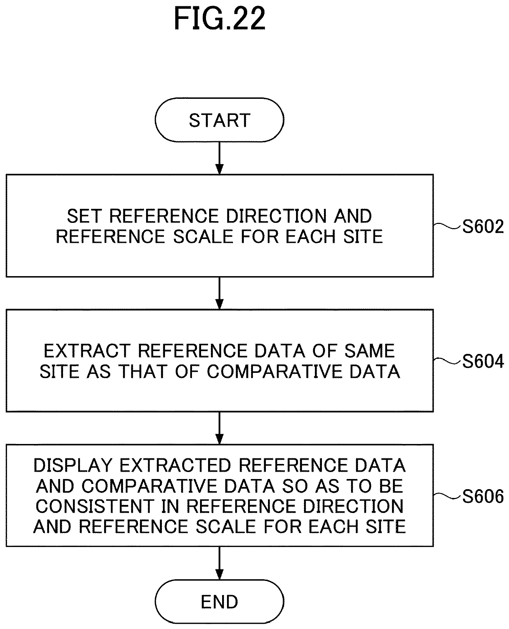

FIG. 22 is a flowchart that schematically illustrates still another example of the pre-process regarding assist of the comparative inspection by the control device 110.

Step S602 as illustrated in FIG. 22 is the same as the process of step S204 in FIG. 9, and thus description thereof will be omitted.

Once the process of step S602 is completed, the control device 110 proceeds to step S604.

In step S604, using the link DB 1105, the comparison display part 1106B extracts reference data (image data or three-dimensional shape data) of the same site as that of comparative data (image data or three-dimensional shape data).

Once the process of step S604 is completed, the control device 110 proceeds to step S606.

In step S606, for each site, a combination of the extracted reference data and comparative data is displayed on the display device 140 so as to be consistent in the reference direction and the reference scale.

Referring back to FIG. 9, once the process of step S606 is completed, the control device 110 ends the process of the flowchart of this time.

In this way, in the present example, based on the relation between the reference data and the comparative data that are managed as described above, the control device 110 can specifically display, on the display device 140, a combination of the reference data and the comparative data corresponding to the common sites of the to-be-compared large-sized structures so that the combination of the reference data and the comparative data can be compared. Thereby, a user can compare the two image data sets corresponding to the common sites of the to-be-compared large-sized structures and inspect change of the same large-sized structure over time or any differences between the large-sized structures of the same design (the same kind).

### [Other examples of inspection assist device]

Next, other exemplary methods for assist of the comparative inspection will be described.

The above-described first to fifth examples may be appropriately combined together.

For example, in the above-described fourth or fifth example, the inspection assist device 100 may employ a similar function to the difference detection part 1107 or the input condition determination part 1100 as in the above-described second or third example.

Also, alterations or modifications may be appropriately added to the above-described first to fifth examples.

For example, in the above-described first to fifth examples, the inspection assist device 100 may further assist preparation by a user of a report of results of the comparative inspection. Specifically, the inspection assist device 100 (control device 110) may assist input of a combination of image data on a predetermined file format for a report of inspection results, the image data corresponding to sites where any differences have been found, of common sites of the to-be-compared large-sized structures. The sites where any differences have been found may be, for example, sites where any differences have been found by a user, of common sites of the to-be-compared large-sized structures, based on the combination of image data displayed on the display device 140 in the above-described first or third example. Also, the sites where any differences have been found may be, for example, sites where any differences have been found by the difference detection part 1107 in the above-described second example, of common sites of the to-be-compared large-sized structures.

Also, for example, in the above-described second example, the inspection assist device 100 may perform the comparative inspection automatically rather than assisting the comparative inspection by a user. Specifically, the inspection assist device 100 (shape estimation part 1102) may receive an image data group transmitted from an autonomously moving drone as the sensor device 200, and automatically create the whole shape data from the image data group of the large-sized structure. Also, based on the automatically generated whole shape data of both of the to-be-compared large-sized structures, the inspection assist device 100 (link process part 1104) may automatically perform association between the image data of the image data groups and sites of an outer shape, and automatically register the results in the link DB 1105. Also, the inspection assist device 100 (difference detection part 1107) may extract a combination of image data corresponding to the common sites of the whole shape data corresponding to the to-be-compared large-sized structures, and automatically detect any differences from the extracted combination of image data. Then, the inspection assist device 100 may input the combination of image data corresponding to a site where any differences have been detected on a file format for inspection results and input inspection results regarding contents of the differences and extents of the differences, and automatically output a file regarding the inspection results.

### [Another example of inspection assist system]

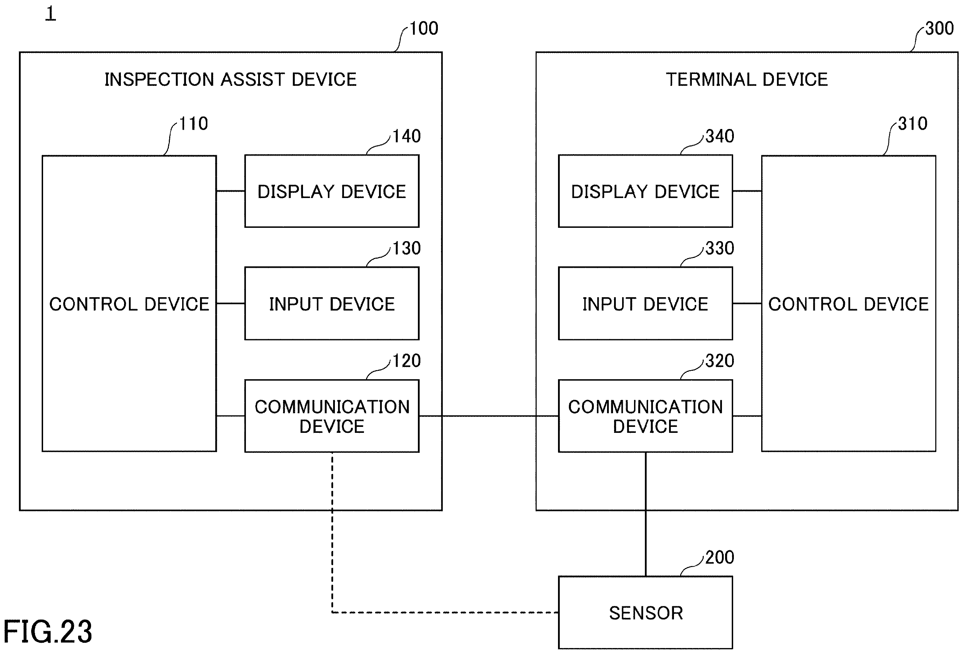

Next, referring to FIG. 23, another example of the inspection assist system 1 according to the present embodiment will be described. Hereinafter, differences from the above-described example (FIG. 1) will be mainly described, and description of the same or corresponding contents may be simplified or omitted.

In the present example, the inspection assist system 1 includes the inspection assist device 100, the sensor device 200, and a terminal device 300.

The terminal device 300 is utilized by a user who performs the comparative inspection. The terminal device 300 may be, for example, a stationary terminal device such as a desktop computer terminal. Alternatively, the terminal device 300 may be, for example, a portable (mobile) terminal device (portable terminal) such as a smartphone, a tablet terminal, or a laptop computer terminal.

The terminal device 300 includes a control device 310, a communication device 320, an input device 330, and a display device 340.

The control device 310 performs control regarding a process operation of the terminal device 300.

Functions of the control device 310 are realized by, for example, any hardware or a combination of any hardware and software. The control device 310 is mainly composed of a computer including, for example, a CPU, a memory device, a nonvolatile auxiliary memory device, and an interface device for inputs from and outputs to the outside. The control device 310 realizes various functions by, for example, loading a program, which is to be installed in the auxiliary memory device, in the memory device and executing the program on the CPU. Examples of the memory device include SRAMs and DRAMs. Examples of the auxiliary memory device include HDDs, SSDs, and flash memories. The interface device includes, for example, external interfaces for connection to recording media. Thereby, the terminal device 300 (control device 310) can incorporate various programs from the recording media via the external interface and install the programs in the auxiliary memory device.

The communication device 320 communicates with an external device (e.g., the inspection assist device 100 or the sensor device 200) via a predetermined communication line. Thereby, the terminal device 300 can exchange data with the external device via the communication device 320. Also, the terminal device 300 can incorporate various programs from the external device and install the programs in the control device 310 (auxiliary memory device).

Note that, functions of the communication device 320 may be incorporated into the control device 310 as the interface device of the control device 310.

The input device 330 receives various inputs from a user of the inspection assist system 1. The input device includes, for example, an operation input device, such as a keyboard, a mouse, a joystick, a touch panel, a touch pad, a button, a toggle, or a lever. Also, the input device 330 may include, for example, a voice-input device that receives a voice input from a user or a gesture-input device that receives a gesture input from a user. A signal corresponding to the input content from a user, which is received by the input device 330, is incorporated into the control device 310.

The display device 340 displays information image regarding the comparative inspection under control of the control device 310. The display device 340 is, for example, a liquid crystal display or an organic EL display.

In the present example, the sensor device 200 is communicably connected to the terminal device 300 via the predetermined communication line, and the sensing data group may be incorporated into the terminal device 300. Alternatively, the sensing data group obtained by the sensor device 200 may be incorporated into the terminal device 300 via a mobile recording medium.

In the present example, the inspection assist device 100 is provided in a place away from a place where a user performs the operations regarding the comparative inspection. The inspection assist device 100 is, for example, a server device. The server device may be a cloud server that is provided outside of a facility where a user performs the operations of the comparative inspection, or an edge server that is provided inside of the facility or in a nearby communication facility (e.g., a base station or an office).

The control device 110 of the inspection assist device 100 is communicably connected to the terminal device 300 via the communication device 120, and may obtain (receive), from the terminal device 300, the sensing data group of the large-sized structure obtained by the sensor device 200.

Also, via the communication device 120, the control device 110 may incorporate various inputs from a user regarding assist of the comparative inspection that are received by the terminal device 300 (input device 330). Thereby, the control device 110 can perform control regarding assist of the comparative inspection in accordance with the inputs by the user to the terminal device 300. Also, the control device 110 can transmit a control command to the terminal device 300 via the communication device 120, and display information images regarding the comparative inspection on the display device 340.

In this way, in the present example, the inspection assist device 100 can receive inputs from a remote user via the terminal device 300, and perform control regarding assist of the comparative inspection. Also, in the present example, it is possible to provide a remote user with information regarding the comparative inspection via the terminal device 300 (display device 340) .

### [Operations]

Next, operations of the inspection assist system 1 (inspection assist device 100) according to the present embodiment will be described.

In the present embodiment, the inspection assist system 1 includes a managing part (e.g., the link process part 1104, the link process part 1104A, or the link process part 1104B). Specifically, based on a sensing data group (one example of the first sensing data group) of one to-be-compared large-sized structure (one example of the first structure) and the whole shape data thereof, the managing part manages a relation between the sensing data group or the whole shape data of one to-be-compared large-sized structure and sensing data of the other structure (one example of the second sensing data) so that common sites between one large-sized structure and the other large-sized structure (one example of the second structure) can be compared with each other.

For example, when the inspection object is a large-sized structure including a large-sized machine such as a shovel and a plant such as a steel plant, there arises a need to obtain many sensing data that focus on sites to be inspected. Also, it is substantially impossible to obtain uniform sensing data at the same distance and at the same angle every time. Therefore, for example, when change is inspected over time, even if sensing data groups obtained at a previous time and a current time are provided, it is difficult to extract a combination of sensing data corresponding to the sites to be inspected. As a result, efficiency of the comparative inspection may decrease and the comparative inspection itself may be impossible to do.

Meanwhile, in the present embodiment, a user can compare the common sites of both of the large-sized structures with each other using the sensing data group or the whole shape data of one large-sized structure and the sensing data of the other large-sized structure, after a relation between the sensing data group or the whole shape data and the sensing data has been managed. Therefore, the inspection assist device 100 can assist a user to realize inspection of differences between the to-be-compared large-sized structures.

Also, in the present embodiment, one and the other of the to-be-compared large-sized structures may be the same large-sized structure at different points in time.

Thereby, the inspection assist device 100 can assist inspection of change of the same large-sized structure over time.

Also, in the present embodiment, one and the other of the to-be-compared large-sized structures may be different structures of the same design.

Thereby, the inspection assist device 100 can assist inspection of differences between the different structures of the same design.

Also, in the present embodiment, the inspection assist device 100 may include an estimation part (e.g., the shape estimation part 1102 or the shape estimation part 1102A). Specifically, based on the sensing data group of one to-be-compared large-sized structure and the sensing data of the other to-be-compared large-sized structure, the estimation part may estimate three-dimensional shapes of one and the other of the large-sized structures. Then, based on the data of three-dimensional shapes (the whole shape data), estimated by the estimation part, of one and the other of the to-be-compared large-sized structures, a managing part (e.g., the link process part 1104 or the link process part 1104A) may manage a relation between the sensing data group of one large-sized structure and the sensing data of the other large-sized structure so that the common sites between one and the other of the large-sized structures can be compared with each other.

Thereby, the inspection assist device 100 can specifically manage a relation between the sensing data group of one to-be-compared large-sized structure and the sensing data of the other to-be-compared large-sized structure in a manner that the common sites of both of the large-sized structures can be compared with each other.

Also, in the present embodiment, the estimation part (the shape estimation part 1102) may estimate (reproduce) a three-dimensional shape of one to-be-compared large-sized structure based on the sensing data group thereof, and also estimate (reproduce) a three-dimensional shape of the other to-be-compared large-sized structure based on the sensing data group thereof (one example of the second sensing data group). Then, the managing part (the link process part 1104) may associate respective data included in the sensing data group of one large-sized structure with sites of the three-dimensional shape of one large-sized structure. Similarly, the managing part (the link process part 1104) may associate respective data included in the sensing data group of the other large-sized structure with sites of the three-dimensional shape of the other large-sized structure.

Thereby, the inspection assist device 100 can specifically manage a relation between the sensing data groups of both of the to-be-compared large-sized structures in a manner that the common sites of both of the large-sized structures can be compared with each other.

Also, in the present embodiment, the estimation part (the shape estimation part 1102A) may estimate, assuming that one and the other of the to-be-compared structures are the same large-sized structure, a three-dimensional shape of the same large-sized structure. Then, the managing part (the link process part 1104A) may associate respective data included in the sensing data group of one to-be-compared large-sized structure with sites of the three-dimensional shape of the same structure, and also associate the sensing data of the other large-sized structure with sites of the three-dimensional shape of the same structure.

Thereby, the inspection assist device 100 can specifically manage a relation between the sensing data group of one to-be-compared large-sized structure and the sensing data of the other to-be-compared large-sized structure in a manner that the common sites of both of the large-sized structures can be compared with each other.

Also, in the present embodiment, the managing part (the link process part 1104B) may perform checking between: the previously provided whole shape data of one to-be-compared large-sized structure (reference large-sized structure) and the sensing data group thereof regarding which sites in the previously provided whole shape data are specified; and the sensing data of the other large-sized structure (comparative large-sized structure). Thereby, the managing part may associate the sensing data of the other large-sized structure with: common sites in the three-dimensional shape of one large-sized structure, the common sites being common to sites of the other large-sized structure corresponding to the sensing data of the other large-sized structure; or the data corresponding to the common sites included in the sensing data group of one large-sized structure.

Thereby, the inspection assist device 100 can specifically manage a relation between the whole shape data or the sensing data group of one to-be-compared large-sized structure and the sensing data of the other to-be-compared large-sized structure in a manner that the common sites of both of the large-sized structures can be compared with each other.

Also, in the present embodiment, the link process part 1104 may associate common sites with each other, the common sites corresponding to each other between the data of the three-dimensional shape (whole shape data) of one large-sized structure and the data of the three-dimensional shape (whole shape data) of the other large-sized structure.

Thereby, using the common sites of the three-dimensional shapes of the large-sized structures, the inspection assist device 100 can specifically manage a relation between the sensing data groups of both of the to-be-compared large-sized structures in a manner that the common sites of both of the large-sized structures can be compared with each other.

Also, in the present embodiment, the inspection assist device 100 may include the difference detection part 1107. Specifically, the difference detection part 1107 may detect any differences between the common sites of one and the other of the large-sized structures based on the sensing data group or three-dimensional shape data (the whole shape data) of one to-be-compared large-sized structure and on the sensing data of the other large-sized structure, a relation therebetween being managed by the managing part.

Thereby, a user can perform the comparative inspection using the detection results. Therefore, the inspection assist device 100 can increase convenience for a user and efficiency of the comparative inspection.

Also, in the present embodiment, the difference detection part 1107 may classify sites where any differences have been found of the common sites of both of the to-be-compared large-sized structures in accordance with contents of the differences, extents of the differences, or both.

Thereby, for example, a user can be provided with information on only the combination of image data of the sites that are limited in accordance with contents of the differences, extents of the differences, or both, of the common sites of both of the to-be-compared large-sized structures. Therefore, the inspection assist device 100 can increase convenience for a user and efficiency of the comparative inspection.

Also, in the present embodiment, the difference detection part 1107 may attach labels representing features to respective data of both of the sensing data groups corresponding to the common sites of both of the to-be-compared large-sized structures. Then, the difference detection part 1107 may detect any differences between the common sites of both of the large-sized structures based on difference between the labels of combinations of the sensing data corresponding to the common sites of both of the large-sized structures.

Thereby, the inspection assist device 100 can specifically detect any differences between the common sites of both of the to-be-compared large-sized structures.

Also, in the present embodiment, the inspection assist device 100 may include the input condition determination part 1100. Specifically, the input condition determination part 1100 may determine whether each of the sensing data groups of both of the to-be-compared large-sized structures includes data of the common defined sites of both of the large-sized structures.

Thereby, for example, the inspection assist device 100 can suppress occurrence of a situation in which the comparative inspection cannot be appropriately performed due to insufficiency of data of the inspection sites in the sensing data group. Therefore, the inspection assist device 100 can increase efficiency of the comparative inspection.

Also, in the present embodiment, at least one of the sensing data groups of both of the to-be-compared large-sized structures may include a plurality of data of the same site that are obtained in a state where the position, the posture, or both of the sensor device 200 are different.

Thereby, the inspection assist device 100 can further precisely reproduce a three-dimensional shape of the to-be-compared large-sized structure.

Also, in the present embodiment, the inspection assist device 100 may include the display part (e.g., the comparison display part 1106, the comparison display part 1106A, or the comparison display part 1106B).
Specifically, the display part may display, on the display devices 140 and 340, a combination of sensing data corresponding to the common sites of both of the large-sized structures so that the sensing data can be compared with each other, based on the sensing data group of one to-be-compared large-sized structure and the sensing data of the other to-be-compared large-sized structure, a relation therebetween being managed by the link process part 1104.

Thereby, a user can compare the combination of image data corresponding to the common sites of both of the to-be-compared large-sized structures and relatively readily inspect differences therebetween. Therefore, the inspection assist device 100 can increase convenience for a user and efficiency of the comparative inspection.

Also, in the present embodiment, the display part may define a common reference direction and a common reference scale for the common sites of both of the to-be-compared large-sized structures.

Thereby, the inspection assist device 100 can display, on the display devices 140 and 340, the combination of image data corresponding to the common sites of both of the to-be-compared large-sized structures in a state of being consistent in the reference direction and the reference scale of the sites. Therefore, a user can compare the image data that have been in the same direction and the same scale. Therefore, the inspection assist device 100 can increase convenience for a user and efficiency of the comparative inspection.

Also, in the present embodiment, the reference direction may be defined as a direction as viewed from the common sites of both of the to-be-compared large-sized structures.

Thereby, even when the postures of the common sites, defined in mobile parts, of both of the large-sized structures are different, the inspection assist device 100 can appropriately arrange the combination of the image data corresponding to the common sites of both of the large-sized structures so as to be in the same direction.

Also, in the present embodiment, the display part may display the combination of image data corresponding to the common sites of both of the to-be-compared large-sized structures so as to emphasize any differences within the combination of the image data.

Thereby, a user can readily understand the differences within the combination of the image data. Therefore, the inspection assist device 100 can increase convenience for a user and efficiency of the comparative inspection.

Also, in the present embodiment, the display part may display, on the display devices 140 and 340, the whole images of both of the to-be-compared large-sized structures (large-sized structure images).

Thereby, a user can perform the comparative inspection while confirming not only the combination of the image data of specific sites but also the whole images of the to-be-compared large-sized structures. Therefore, the inspection assist device 100 can increase convenience for a user and efficiency of the comparative inspection.

Also, in the present embodiment, the display part may display the combination of the sensing data corresponding to the combination of the common sites of both of the to-be-compared large-sized structures, with the sensing data being associated with the sites of the whole images of the large-sized structures.

Thereby, while making comparison with the sites of the whole images of the large-sized structures, a user can readily understand places of the sites corresponding to the combination of the image data displayed on the display devices 140 and 340. Therefore, the inspection assist device 100 can increase convenience for a user and efficiency of the comparative inspection.

Also, in the present embodiment, based on the sensing data groups of both of the to-be-compared large-sized structures managed by the link process part 1104, the display part may display information regarding differences between the common sites of both of the large-sized structures so that the information is associated with sites of the whole image.

Thereby, a user can more readily understand the differences within the combination of the image data displayed on the display devices 140 and 340. Therefore, the inspection assist device 100 can increase convenience for a user and efficiency of the comparative inspection.

While the embodiments have been described above in detail, the present disclosure is not limited to the above embodiments, and various modifications and changes are possible within the scope of the subject matter as recited in the claims.

Lastly, the present application claims priority to Japanese Patent Application No. 2020-194575, filed November 24, 2020. The contents of this Japanese Patent Application are incorporated herein by reference in their entirety.

### [Description of the Reference Numeral]

1 inspection assist system
100 inspection assist device (information processing device)
110 control device
120 communication device
130 input device
140 display device
200 sensor device (sensor)
300 terminal device
310 control device
320 communication device
330 input device
340 display device
1100 input condition determination part (determination part)
1101 image data memory part
1102, 1102A, 1102B shape estimation part (estimation part)
1103, 1103A whole shape data memory part
1104, 1104A, 1104B link process part (managing part)
1105, 1105A, 1105B link DB
1106, 1106A, 1106B comparison display part (display part)
1107 difference detection part (detection part)
1108 comparative data memory part
1109 reference data memory part

## Claims

1. An information processing device, comprising:
a managing part that manages, based on a first sensing data group regarding a shape of a first structure and data of a three-dimensional shape of the first structure, a relation between
the first sensing data group or the data of the three-dimensional shape of the first structure, and
second sensing data regarding a shape of a second structure
so that common sites of the first structure and the second structure can be compared with each other.

2. The information processing device according to claim 1, wherein the first structure and the second structure are the same structure at different points in time or different structures of the same design.

3. The information processing device according to claim 1 or 2, further comprising an estimation part that estimates the three-dimensional shape of the first structure and a three-dimensional shape of the second structure based on the first sensing data group and the second sensing data,
wherein the managing part manages, based on the data of the three-dimensional shape of the first structure and data of the three-dimensional shape of the second structure, the relation between the first sensing data group and the second sensing data so that the common sites of the first structure and the second structure can be compared with each other,
the three-dimensional shape of the first structure and the three-dimensional shape of the second structure being estimated by the estimation part.

4. The information processing device according to claim 3, wherein:
the estimation part estimates the three-dimensional shape of the first structure based on the first sensing data group, and estimates the three-dimensional shape of the second structure based on a second sensing data group that is a collection of the second sensing data; and
the managing part associates respective data included in the first sensing data group with sites of the three-dimensional shape of the first structure, and associates respective data included in the second sensing data group with sites of the three-dimensional shape of the second structure.

5. The information processing device according to claim 3, wherein:
the estimation part estimates, assuming that the first structure and the second structure are the same structure, a three-dimensional shape of the same structure; and
the managing part associates respective data included in the first sensing data group with sites of the three-dimensional shape of the same structure, and associates the second sensing data with sites of the three-dimensional shape of the same structure.

6. The information processing device according to claim 1 or 2, wherein the three-dimensional shape of the first structure is previously provided, and sites of the first sensing data group in the data of the three-dimensional shape are specified,
the managing part performs checking between
the data of the three-dimensional shape of the first structure and the first sensing data group, and
the second sensing data,
thereby associating the second sensing data with
common sites in the three-dimensional shape of the first structure, the common sites being common to sites of the second structure corresponding to the second sensing data, or
data corresponding to the common sites included in the first sensing data group.

7. The information processing device according to claim 5, wherein the managing part associates common sites with each other, the common sites corresponding to each other between the data of the three-dimensional shape of the first structure and the data of the three-dimensional shape of the second structure.

8. The information processing device according to any one of claims 1 to 7, further comprising a detection part that detects a difference between the common sites of the first structure and the second structure based on the first sensing data group or the data of the three-dimensional shape of the first structure and on the second sensing data, a relation therebetween being managed by the managing part.

9. The information processing device according to claim 8, wherein the detection part classifies a site where the difference is found of the common sites of the first structure and the second structure in accordance with a content of the difference, an extent of the difference, or both.

10. The information processing device according to claim 8 or 9, wherein the detection part
attaches labels representing features to the data of the first sensing data group and the second sensing data corresponding to the common sites of the first structure and the second structure,
thereby detecting the difference between the common sites of the first structure and the second structure based on difference between the labels of the data.

11. The information processing device according to any one of claims 1 to 10, further comprising a determination part that determines whether each of the first sensing data group and a second sensing data group that is a collection of the second sensing data includes data of predetermined common sites of the first structure and the second structure.

12. The information processing device according to any one of claims 1 to 11, wherein either or both of the first sensing data group and a second sensing data group that is a collection of the second sensing data include a plurality of data of the same site that are obtained in a state where a position, a posture, or both of the sensor are different.

13. The information processing device according to any one of claims 1 to 12, further comprising a display part that displays data of the first sensing data group and the second sensing data corresponding to a combination of the common sites of the first structure and the second structure so that the data of the first sensing data group and the second sensing data can be compared with each other, based on the first sensing data group or the data of the three-dimensional shape of the first structure and on the second sensing data, a relation therebetween being managed by the managing part.

14. The information processing device according to claim 13, wherein the display part defines a common direction and a common scale for the common sites of the first structure and the second structure.

15. The information processing device according to claim 14, wherein the common direction is defined as a direction as viewed from the common sites of the first structure and the second structure.

16. The information processing device according to any one of claims 13 to 15, wherein the display part displays the data of the first sensing data group and the second sensing data corresponding to the common sites of the first structure and the second structure so as to emphasize a difference between the data of the first sensing data group and the second sensing data.

17. The information processing device according to any one of claims 13 to 16, wherein the display part displays whole images of the first structure and the second structure.

18. The information processing device according to claim 17, wherein the display part displays the data of the first sensing data group and the second sensing data corresponding to the combination of the common sites of the first structure and the second structure, the data of the first sensing data group and the second sensing data being associated with sites of the whole images.

19. The information processing device according to claim 17 or 18, wherein the display part displays information regarding a difference between the common sites of the first structure and the second structure, the information being associated with sites of the whole images, based on the first sensing data group and the second sensing data, a relation therebetween being managed by the managing part.

20. An information processing method, comprising:
a managing step in which an information processing device manages, based on a first sensing data group regarding a shape of a first structure and data of a three-dimensional shape of the first structure, a relation between
the first sensing data group or the data of the three-dimensional shape of the first structure, and
second sensing data regarding a shape of a second structure
so that common sites of the first structure and the second structure can be compared with each other.

21. A program that causes an information processing device to execute a managing step of managing, based on a first sensing data group regarding a shape of a first structure and data of a three-dimensional shape of the first structure, a relation between
the first sensing data group or the data of the three-dimensional shape of the first structure, and
second sensing data regarding a shape of a second structure
so that common sites of the first structure and the second structure can be compared with each other.
